# EUROPEAN PATENT APPLICATION

(11) **EP 4 660 754 A1**
(43) Date of publication of application: **10.12.2025**
(21) Application number: 25179367.5
(22) Date of filing: 28.05.2025
(51) Int. Cl.: G06F 3/01, G06T 15/50, G06T 19/00, G06T 19/20, G06F 3/04815, G06F 3/04886, G06T 11/00, G06F 3/0481

(54) **SYSTEM AND METHOD OF APPLYING PRESENTATION EFFECTS TO REGIONS OF MIXED REALITY ENVIRONMENTS**

(30) Priority: 09.06.2024 US 202463657973 P; 23.04.2025 US 202519187875
(71) Applicant: Apple Inc., Cupertino, CA 95014 (US)
(72) Inventor: FORD, Joshua R., Cupertino, 95014 (US); WANG, Alexander L., Cupertino, 95014 (US); SHARIFIAN, Aryan, Cupertino, 95014 (US); ISKANDAR, Edwin, Cupertino, 95014 (US); VAN HAREN, Emily K., Cupertino, 95014 (US); CHU, Gregory D., Cupertino, 95014 (US); JUN, Hanseul, Cupertino, 95014 (US); DUDRENOV, Pavel V., Cupertino, 95014 (US); CALDERONE, Tyler R., Cupertino, 95014 (US); PARK, Jee Young, Cupertino, 95014 (US); KERLEY, Lee D., Cupertino, 95014 (US); STEWART, Raymond T., Cupertino, 95014 (US); WIANTRAKOON, Phankham, Cupertino, 95014 (US); KNOWLTON, Daniel, Cupertino, 95014 (US)
(74) Representative: Zacco Denmark A/S

(57) **Abstract**

In some embodiments, an electronic device presents an MR environment including real content and/or virtual content. In some embodiments, a client application provides an API with a target region of the MR environment, one or more criteria, and a presentation effect. In response to the one or more criteria being satisfied, the electronic device presents the target region of the MR environment with the presentation effect.

## Description

### Field of the Disclosure

This relates generally to systems and methods of applying presentation effects to target regions of mixed reality (MR) environments according to criteria provided by client applications.

### Background of the Disclosure

Some computer graphical environments provide two-dimensional and/or three-dimensional environments where at least some objects displayed for a user's viewing are virtual and generated by a computer. In some embodiments, mixed reality (MR) environments include virtual content and real content in the physical environment of the electronic device. In some situations, presentation of virtual content (e.g., one or more images, video, and/or audio content) obscures the presentation of other content, including real content in the physical environment of the electronic device.

### Summary of the Disclosure

This relates generally to systems and methods of applying presentation effects to target regions of mixed reality (MR) environments according to criteria provided by client applications. The MR environment optionally includes virtual content and/or real content. In some embodiments, an application programming interface (API) generates breakthrough effects for presentation of real content in an MR environment under certain conditions. Optionally, when one or more criteria are not satisfied, the electronic device presents the respective portion of the MR environment without the one or more breakthrough effects. Optionally, when one or more criteria are satisfied, the electronic device presents the respective portion of the MR environment including applying one or more breakthrough effects to increase the prominence of real content in the respective portion of the MR environment.

The API optionally receives, from a first client application, an indication of a first target region in the MR environment, one or more first criteria, and a first presentation effect. For example, the first presentation effect includes one or more breakthrough effects that cause the electronic device to present real content in the first target region with increased prominence compared to the presentation of the target region without the first presentation effect. In some embodiments, while the first application is running on the electronic device, in response to detecting the one or more criteria are satisfied, the API applies the first presentation effect to the first target region of the MR environment. In some embodiments, while the first application is running on the electronic device, in response to detecting the one or more criteria are not satisfied, the API forgoes applying the first presentation effect to the first target region of the MR environment. Optionally, forgoing applying the first presentation effect to the first target region of the MR environment includes presenting real content of the first target region with less prominence than the presentation of the real content when applying the first presentation effect. Optionally, forgoing applying the first presentation effect to the first target region of the MR environment includes forgoing presenting real content of the first target region.

In some embodiments, one or more client applications of an electronic device use the API to apply breakthrough effects with customized criteria and presentation effects. A first client application optionally provides the API with a first target region, one or more first criteria, and a first presentation effect. While the first client application is running on the electronic device, the API evaluates whether or not the one or more first criteria are satisfied relative to the first target region of the MR environment. In some embodiments, the client application receives an indication from the API when the one or more first criteria are satisfied to apply the first presentation effect to the first target region. In some embodiments, the API applies the first presentation effect to the first target region when the one or more criteria are satisfied.

In some embodiments, the electronic device includes multiple client applications that use the API to apply breakthrough effects to regions of the MR environments based on respective criteria. In some embodiments, a first client application uses the API to apply a variety of breakthrough effects to a variety of regions of the MR environments including a variety of real content in response to a variety of one or more criteria. In some embodiments, a second client application different from the first client application uses the API to apply breakthrough effects different from those of the first client application, optionally to target regions including real objects different from those identified by the first client application, optionally based on criteria different from the criteria provided by the first application. Thus, the API provides client applications custom breakthrough effects that optionally vary in terms of target region (including target real objects), one or more breakthrough effects, and/or one or more criteria for applying the one or more breakthrough effects.

The full descriptions of these examples are provided in the Drawings and the Detailed Description, and it is understood that this Summary does not limit the scope of the disclosure in any way.

### Brief Description of the Drawings

For improved understanding of the various examples described herein, reference should be made to the Detailed Description below along with the following drawings. Like reference numerals often refer to corresponding parts throughout the drawings.
Fig. 1 illustrates an electronic device presenting a mixed reality (MR) environment according to some embodiments of the disclosure.
Fig. 2 illustrates a block diagram of an exemplary architecture for a system according to some embodiments of the disclosure.
Figs. 3A-3B illustrates an example of people breakthrough according to some embodiments of the disclosure.
Fig. 4 is a block diagram illustrating interactions between an operating system and one or more client applications, such as client application A, and client application B, according to some embodiments.
Fig. 5 is a flow chart of an example method of applying customized breakthrough effects in accordance with some embodiments of the disclosure.
Figs. 6A-6D illustrate example breakthrough frameworks according to some embodiments of the disclosure.
Figs. 7A-7D illustrate example application and/or API processes according to some embodiments of the disclosure.

### Detailed Description

This relates generally to systems and methods of applying presentation effects to target regions of mixed reality (MR) environments according to criteria provided by client applications. The MR environment optionally includes virtual content and/or real content. In some embodiments, an application programming interface (API) generates breakthrough effects for presentation of real content in an MR environment under certain conditions. Optionally, when one or more criteria are not satisfied, the electronic device presents the respective portion of the MR environment without the one or more breakthrough effects. Optionally, when one or more criteria are satisfied, the electronic device presents the respective portion of the MR environment including applying one or more breakthrough effects to increase the prominence of real content in the respective portion of the MR environment.

The API optionally receives, from a first client application, an indication of a first target region in the MR environment, one or more first criteria, and a first presentation effect. For example, the first presentation effect includes one or more breakthrough effects that cause the electronic device to present real content in the first target region with increased prominence compared to the presentation of the target region without the first presentation effect. In some embodiments, while the first application is running on the electronic device, in response to detecting the one or more criteria are satisfied, the API applies the first presentation effect to the first target region of the MR environment. In some embodiments, while the first application is running on the electronic device, in response to detecting the one or more criteria are not satisfied, the API forgoes applying the first presentation effect to the first target region of the MR environment. Optionally, forgoing applying the first presentation effect to the first target region of the MR environment includes presenting real content of the first target region with less prominence than the presentation of the real content when applying the first presentation effect. Optionally, forgoing applying the first presentation effect to the first target region of the MR environment includes forgoing presenting real content of the first target region.

In some embodiments, one or more client applications of an electronic device use the API to apply breakthrough effects with customized criteria and presentation effects. A first client application optionally provides the API with a first target region, one or more first criteria, and a first presentation effect. While the first client application is running on the electronic device, the API evaluates whether or not the one or more first criteria are satisfied relative to the first target region of the MR environment. In some embodiments, the client application receives an indication from the API when the one or more first criteria are satisfied to apply the first presentation effect to the first target region. In some embodiments, the API applies the first presentation effect to the first target region when the one or more criteria are satisfied.

In some embodiments, the electronic device includes multiple client applications that use the API to apply breakthrough effects to regions of the MR environments based on respective criteria. In some embodiments, a first client application uses the API to apply a variety of breakthrough effects to a variety of regions of the MR environments including a variety of real content in response to a variety of one or more criteria. In some embodiments, a second client application different from the first client application uses the API to apply breakthrough effects different from those of the first client application, optionally to target regions including real objects different from those identified by the first client application, optionally based on criteria different from the criteria provided by the first application. Thus, the API provides client applications custom breakthrough effects that optionally vary in terms of target region (including target real objects), one or more breakthrough effects, and/or one or more criteria for applying the one or more breakthrough effects.

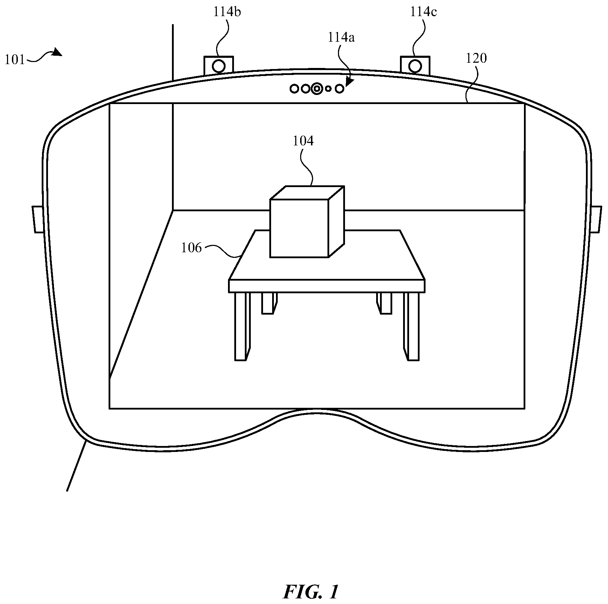

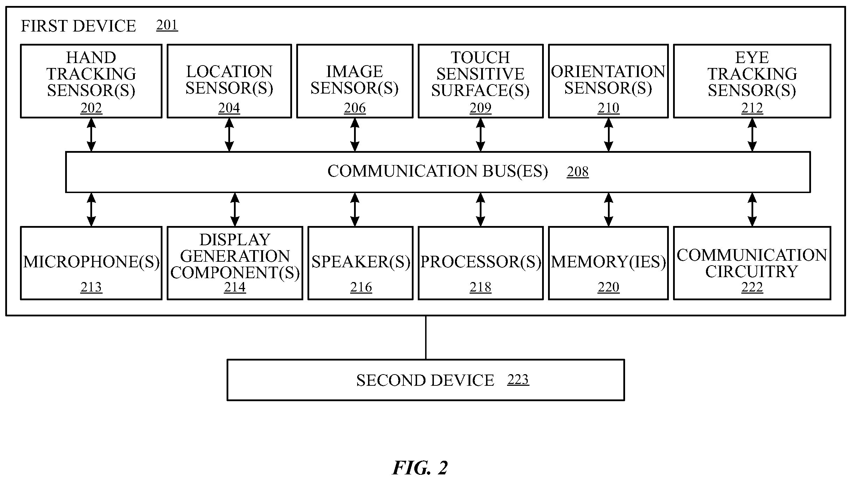

Fig. 1 illustrates an electronic device 101 presenting an mixed reality (MR) environment (e.g., a computer-generated environment) according to some embodiments of the disclosure. In some embodiments, electronic device 101 is a hand-held or mobile device, such as a tablet computer, laptop computer, smartphone, or head-mounted display. Examples of electronic device 101 are described below with reference to the architecture block diagram of Fig. 2. As shown in Fig. 1, electronic device 101, real-world table 106, and real-world coffee mug 152 are located in the physical environment 100. The physical environment may include physical features such as a physical surface (e.g., floor, walls) or a physical object (e.g., table, lamp, etc.). In some embodiments, electronic device 101 may be configured to capture images of physical environment 100 including real-world table 106 (illustrated in the field of view of electronic device 101). In some embodiments, in response to a trigger, the electronic device 101 may be configured to display a virtual object 104 (e.g., two-dimensional virtual content or three-dimensional virtual content) in the MR environment (e.g., represented by a rectangle illustrated in Fig. 1) that is not present in the physical environment 100, but is displayed in the MR environment positioned on (e.g., anchored to) the top of a representation of real-world table 106. For example, virtual object 104 can be displayed on the surface of the representation of the real-world table 106 in the MR environment presented via electronic device 101 in response to detecting the planar surface of real-world table 106 in the physical environment 100.

In some embodiments, the electronic device uses passthrough techniques to present representations of real objects, such as the representation of the real-world table 106. In some embodiments, the electronic device uses true or real passthrough by which one or more portions of the real environment is visible through a portion of one or more displays used to present the MR environment. In embodiments including true or real passthrough, the representation of the real-world table 106 is a view of the real-world table 106. In some embodiments, the electronic device uses virtual or video passthrough by which the electronic device displays virtual or video representations of one or more portions of the real environment in the MR environment using one or more displays. In embodiments including virtual or video passthrough, the representation is a computer-generated virtual representation or video representation of the real-world table 106.

It should be understood that virtual object 104 is a representative virtual object and one or more different virtual objects (e.g., of various dimensionality such as two-dimensional or three-dimensional virtual objects) can be included and rendered in a three-dimensional computer-generated environment. For example, the virtual object can represent an application, or a user interface displayed in the computer-generated environment. In some embodiments, the virtual object can represent content corresponding to the application and/or displayed via the user interface in the computer-generated environment. In some embodiments, the virtual object 104 is optionally configured to be interactive and responsive to user input, such that a user may virtually touch, tap, move, rotate, or otherwise interact with, the virtual object. In some embodiments, the virtual object 104 may be displayed in a three-dimensional computer-generated environment within a multi-user communication session ("multi-user communication session," "communication session"). In some such examples, as described in more detail below, the virtual object 104 may be viewable and/or configured to be interactive and responsive to multiple users and/or user input provided by multiple users, respectively. Additionally, it should be understood, that the 3D environment (or 3D virtual object) described herein may be a representation of a 3D environment (or three-dimensional virtual object) projected or presented at an electronic device.

In the discussion that follows, an electronic device that is in communication with a display generation component and one or more input devices is described. It should be understood that the electronic device optionally is in communication with one or more other physical user-interface devices, such as a touch-sensitive surface, a physical keyboard, a mouse, a joystick, a hand tracking device, an eye tracking device, a stylus, etc. Further, as described above, it should be understood that the described electronic device, display, and touch-sensitive surface are optionally distributed amongst two or more devices. Therefore, as used in this disclosure, information displayed on the electronic device or by the electronic device is optionally used to describe information outputted by the electronic device for display on a separate display device (touch-sensitive or not). Similarly, as used in this disclosure, input received on the electronic device (e.g., touch input received on a touch-sensitive surface of the electronic device, or touch input received on the surface of a stylus) is optionally used to describe input received on a separate input device, from which the electronic device receives input information.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a television channel browsing application, and/or a digital video player application.

Fig. 2 illustrates a block diagram of an exemplary architecture for a system including first electronic device 201 and second electronic device 223 according to some embodiments of the disclosure. In some embodiments, first electronic device 201second electronic device 223the first electronic device 201 and the second electronic device 223 are in communication with each other. In some embodiments, the first electronic device 201 is a portable device, such as a mobile phone, smart phone, a tablet computer, a laptop computer, and/or wearable electronic device (e.g., a head-mounted display). For example, the first electronic device 201 has one or more characteristics of electronic device 101 described herein. In some embodiments, the second electronic device 223 is an input device such as a keyboard, mouse, trackpad, stylus, touch screen, and/or microphone and/or an output device such as a speaker or display device.

As illustrated in Fig. 2, the first electronic device 201 optionally includes various sensors (e.g., one or more hand tracking sensors 202, one or more location sensors 204, one or more image sensors 206, one or more touch-sensitive surfaces 209, one or more motion and/or orientation sensors 210, one or more eye tracking sensors 212, one or more microphones 213 or other audio sensors, etc.), one or more display generation components 214, one or more speakers 216, one or more processors 218, one or more memories 220, and/or communication circuitry 222. 222

Communication circuitry 222 optionally includes circuitry for communicating with electronic devices, networks, such as the Internet, intranets, a wired network and/or a wireless network, cellular networks, and wireless local area networks (LANs). Communication circuitry 222 optionally includes circuitry for communicating using near-field communication (NFC) and/or short-range communication, such as Bluetooth^{®}.

Processors 218 include one or more general processors, one or more graphics processors, and/or one or more digital signal processors. In some embodiments, memory 220 is a non-transitory computer-readable storage medium (e.g., flash memory, random access memory, or other volatile or non-volatile memory or storage) that stores computer-readable instructions configured to be executed by one or more processors 218 to perform the techniques, processes, and/or methods described below. In some embodiments, memory 220 can include more than one non-transitory computer-readable storage medium. A non-transitory computer-readable storage medium can be any medium (e.g., excluding a signal) that can tangibly contain or store computer-executable instructions for use by or in connection with the instruction execution system, apparatus, or device. In some embodiments, the storage medium is a transitory computer-readable storage medium. In some embodiments, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray technologies, as well as persistent solid-state memory such as flash, solid-state drives, and the like.

In some embodiments, one or more display generation components 214 include a single display (e.g., a liquid-crystal display (LCD), organic light-emitting diode (OLED), or other types of display). In some embodiments, one or more display generation components 214 include multiple displays. In some embodiments, one or more display generation components 214 can include a display with touch capability (e.g., a touch screen), a projector, a holographic projector, a retinal projector, a transparent or translucent display, etc. In some embodiments, electronic device 201 includes one or more touch-sensitive surfaces 209 for receiving user inputs, such as tap inputs and swipe inputs or other gestures. In some embodiments, one or more display generation components 214 and one or more touch-sensitive surfaces 209 form one or more touch-sensitive displays (e.g., a touch screen integrated with electronic device 201 or external to electronic device 201 that is in communication with electronic device 201).

Electronic device 201 optionally includes one or more image sensors 206. Image sensors 206 optionally include one or more visible light image sensors, such as charged coupled device (CCD) sensors, and/or complementary metal-oxide-semiconductor (CMOS) sensors operable to obtain images of physical objects from the real-world environment. The one or more image sensors 206 also optionally include one or more infrared (IR) sensors, such as a passive or an active IR sensor, for detecting infrared light from the real-world environment. For example, an active IR sensor includes an IR emitter for emitting infrared light into the real-world environment. The one or more image sensors 206 also optionally include one or more cameras configured to capture movement of physical objects in the real-world environment. The one or more image sensors 206 also optionally include one or more depth sensors configured to detect the distance of physical objects from device 201. In some embodiments, information from one or more depth sensors can allow the device to identify and differentiate objects in the real-world environment from other objects in the real-world environment. In some embodiments, one or more depth sensors can allow the device to determine the texture and/or topography of objects in the real-world environment.

In some embodiments, electronic device 201 uses CCD sensors, event cameras, and depth sensors in combination to detect the physical environment around electronic device 201. In some embodiments, the one or more image sensors 206 include a first image sensor and a second image sensor. The first image sensor and the second image sensor work in tandem and are optionally configured to capture different information of physical objects in the real-world environment. In some embodiments, the first image sensor is a visible light image sensor and the second image sensor is a depth sensor. In some embodiments, device 201 uses the one or more image sensors 206 to detect the position and orientation of device 201 and/or one or more display generation components 214 in the real-world environment. For example, device 201 uses one or more image sensors 206 to track the position and orientation of one or more display generation components 214 relative to one or more fixed objects in the real-world environment.

In some embodiments, device 201 includes one or more microphones 213 or other audio sensors. Device 201 uses one or more microphones 213 to detect sound from the user and/or the real-world environment of the user. In some embodiments, one or more microphones 213 includes an array of microphones (a plurality of microphones) that optionally operate in tandem, such as to identify ambient noise or to locate the source of sound in space of the real-world environment.

In some embodiments, device 201 includes one or more location sensors 204 for detecting a location of device 201 and/or one or more display generation components 214. For example, one or more location sensors 204can include a GPS receiver that receives data from one or more satellites and allows device 201 to determine the device's absolute position in the physical world.

In some embodiments, device 201 includes one or more orientation sensors 210 for detecting orientation and/or movement of device 201 and/or one or more display generation components 214. For example, device 201 uses one or more orientation sensors 210 to track changes in the position and/or orientation of device 201 and/or one or more display generation components 214, such as with respect to physical objects in the real-world environment. The one or more orientation sensors 210 optionally include one or more gyroscopes and/or one or more accelerometers.

Device 201 includes one or more hand tracking sensors 202/202B and/or one or more eye tracking sensors 212, in some embodiments. The one or more hand tracking sensors 202 are configured to track the position/location of one or more portions of the user's hands, and/or motions of one or more portions of the user's hands with respect to the mixed reality environment, relative to the one or more display generation components 214, and/or relative to another defined coordinate system. The one or more eye tracking sensors 212 are configured to track the position and movement of a user's gaze (eyes, face, or head, more generally) with respect to the real-world or mixed reality environment and/or relative to the one or more display generation components 214. In some embodiments, one or more hand tracking sensors 202 and/or one or more eye tracking sensors 212 are implemented together with the one or more display generation components 214. In some embodiments, the one or more hand tracking sensors 202 and/or one or more eye tracking sensors 212are implemented separate from the one or more display generation components 214.

In some embodiments, the one or more hand tracking sensors 202 can use one or more image sensors 206 (e.g., one or more IR cameras, 3D cameras, depth cameras, etc.) that capture three-dimensional information from the real-world including one or more hands (e.g., of a human user). In some embodiments, the hands can be resolved with sufficient resolution to distinguish fingers and their respective positions. In some embodiments, one or more image sensors 206 are positioned relative to the user to define a field of view of the image sensors 206 and an interaction space in which finger/hand position, orientation and/or movement captured by the image sensors are used as inputs (e.g., to distinguish from a user's resting hand or other hands of other persons in the real-world environment). Tracking the fingers/hands for input (e.g., gestures, touch, tap, etc.) can be advantageous in that it does not require the user to touch, hold or wear any sort of beacon, sensor, or other marker.

In some embodiments, one or more eye tracking sensors 212 includes at least one eye tracking camera (e.g., infrared (IR) cameras) and/or illumination sources (e.g., IR light sources, such as LEDs) that emit light towards a user's eyes. The eye tracking cameras may be pointed towards a user's eyes to receive reflected IR light from the light sources directly or indirectly from the eyes. In some embodiments, both eyes are tracked separately by respective eye tracking cameras and illumination sources, and a focus/gaze can be determined from tracking both eyes. In some embodiments, one eye (e.g., a dominant eye) is tracked by a respective eye tracking camera/illumination source(s).

Device 201 and first electronic device 201 are not limited to the components and configuration of Fig. 2, but can include fewer, other, or additional components in multiple configurations. In some embodiments, first electronic device 201 can be implemented in a single device. A person or persons using first electronic device 201, is optionally referred to herein as a user or users of the device(s).

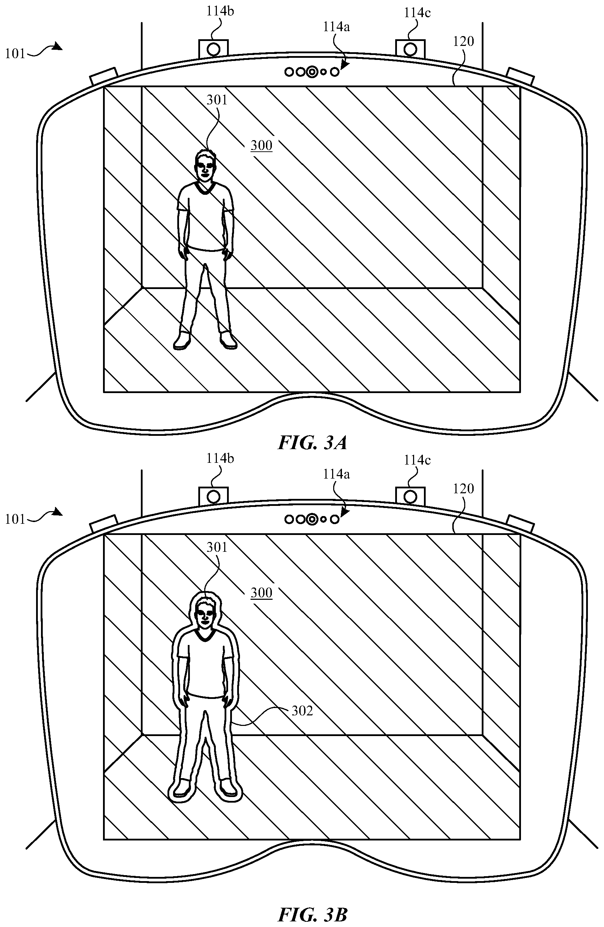

As described herein, an electronic device that displays virtual content optionally implements breakthrough. For example, when operating in MR environment (or other environments with virtual content), real objects in the physical environments can be occluded by the virtual content. The occlusion, though useful for providing a sense of reality to the virtual content and/or creating an immersive experience, may also decouple the user from the environment. Breakthrough, including deemphasizing virtual content and/or emphasizing real content or objects, can provide for more connection between the user of the electronic device and the physical environment around the user of the electronic device. Figs. 3A-3B illustrates an example of people breakthrough according to some embodiments of the disclosure. Figs. 3A-3B illustrate an electronic device 101 in a physical environment including another person 301. Figs. 3A-3B illustrate an MR environment 300 presenting or an immersive environment with virtual content. As shown in Fig. 3A without breakthrough, person 301 is occluded by the virtual content. However, as shown in Fig. 3B, when a breakthrough effect 302 is applied, person 301 is not occluded by the virtual content. For example, the breakthrough effect can include decreasing the opacity of the virtual content in a target region corresponding to person 301. In some embodiments, the breakthrough effect can include forgoing rendering portions of virtual content in a volume of the environment at which the person is located. People breakthrough can occur when one or more breakthrough criteria are satisfied for breakthrough of a person. For example, the one or more criteria can be satisfied when identifying a person (or people) within the field of view of cameras of electronic device 101, identifying the person (or people) in the field of view of the user of the electronic device 101, identifying the person (or people) within a threshold distance of the electronic device 101, and/or identifying the person (or people) facing the user of the electronic device 101, etc.). Thus, identifying a person (or people) and applying a breakthrough in the MR environment 300 can provide for an improved connection with the physical environment. This people breakthrough reduces isolation and enables interactions between the user of electronic device 101 and others in the environment around the user of electronic device 101. Automatic breakthrough also reduces the number of user inputs manually required by user of electronic device 101, which improves user experience. It is understood that breakthrough is not limited to people breakthrough. For example, portions (e.g., hands, arms, etc.) of the user of the electronic device can also be detected and breakthrough can be applied to enable interactions with object in the physical environment and with virtual content.

As described herein, it is desirable to expand breakthrough to other regions of the MR environment beyond portions of the user or other people. For example, objects in the environment can be hazards to the user. For example, furniture or stairs or other objects in the walking path or arms reach of the user of the electronic device that are occluded could be hazardous to the user. Additionally, some real objects that are occluded by virtual content make physical interactions with such objects harder. For example, drinking from a cup or using physical input devices (e.g., a controller, or keyboard, etc.) can be difficult when virtual content occludes these objects. To improve user experience breakthrough treatment can be applied to expose the physical objects otherwise occluded by the virtual content. Customization and expansion of breakthrough can be achieved using a breakthrough framework and/or breakthrough API.

As used herein "breakthrough" broadly encompasses techniques for blending the presentation of real and virtual content in an MR environment. In some embodiments, an electronic device 101 presents a view of the real environment through a transparent portion of a display device. In these embodiments, the user "sees through" the display device to view the real environment, optionally without the display device actively displaying virtual or video representations of the real environment. In some embodiments, the electronic device 101 occludes the view of portion of the real environment by controlling optics of the display to affect light passing from the real environment to the user's eye. For example, an electrochromic dimming layer provided in a lens or display assembly can be electrically controlled to dim the real-world environment, such as at locations at which virtual content is to be presented. Additionally or alternatively, The electronic device 101 occludes the view of portions of the real environment by actively displaying virtual content at locations in the MR environment that block the user's view of the portions of the real environment. Optionally, the electronic device displays the virtual content with less than full opacity, thus making portions of real content and portions of virtual content concurrently visible despite the virtual content occluding the real content (or the other way around).

In some embodiments, an electronic device displays a representation of the real environment using a display device that does not allow the user to see through the display device to those portions of the real environment. In these embodiments, the display devices "passes" the real content "through" to the user's eye using video representation of the real environment. For example, outward-facing cameras capture the real environment and the video is displayed for viewing by the user's eye. The electronic device 101 occludes the view of portions of the real environment by forgoing displaying representations of those portions of the real environment and/or displaying virtual content at locations in the MR environment that simulate blocking the user's view of the portions of the real environment. Optionally, the electronic device displays the virtual content and/or the real content with less than full opacity, thus making portions of real content and portions of virtual content concurrently visible despite the virtual content occluding the representations of real content (or the other way around).

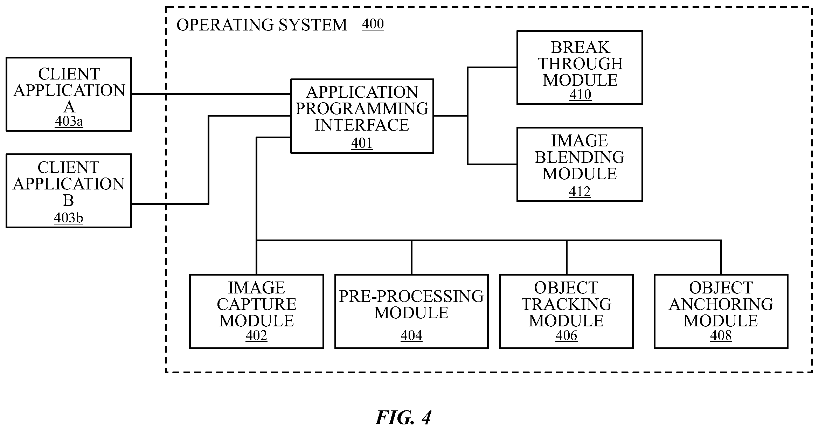

Fig. 4 is a block diagram illustrating interactions between an operating system 400 and one or more client applications, such as client application A 403a and client application B 403b, according to some embodiments. As shown in Fig. 4, the operating system 400 includes image capture module 402, pre-processing module 404, object tracking module 406, and object anchoring module 408. One or more of these modules are configured to provide one or more inputs to API 401. Operating system 400 optionally includes breakthrough module 410 and/or image blending module 412 configured to receive one or more inputs from API 401. API 401 optionally receives one or more further inputs from one or more client applications, such as client application A 403a and client application B 403b.

Modules 402, 404, 406, 408, 410, and/or 412 optionally include circuitry, such as memory or memories and/or one or more processors. Modules 402, 404, 406, 408, 410, and/or 412 optionally include one or more software programs. The one or more software programs are optionally stored using a non-transitory computer readable storage medium or multiple non-transitory computer readable storage media. In some embodiments, client application A 403a and/or client application B 403b are software programs stored on (e.g., memory or non-transitory computer readable storage medium) and/or accessible to (e.g., via a network connection to another device) the electronic device including operating system 400. Modules 402, 404, 406, 408, 410, and/or 412 are described in further detail below.

In some embodiments, the electronic device 101 implements the breakthrough effect described above with reference to Figs. 3A-3B systemwide. For example, one or more criteria to satisfy for presenting a representation of a real person with breakthrough and the one or more breakthrough effects used in response to detecting that the criteria are satisfied are hardcoded in the operating system 400. In some situations, it is advantageous to provide an API 401 that makes breakthrough techniques available to developers for use in other contexts (e.g., other than people breakthrough shown in Figs. 3A-3B). API 401 optionally interfaces with other modules 402 through 412 of the operating system 400 (e.g., hardware and/or software modules) to provide custom or customizable breakthrough effects to operation of a respective client application (e.g., client application A 403a and/or client application B 403b). Custom or customizable breakthrough effects of API 401 provide developers with tools to improve user experience for developers, including simplifying the application development process and providing developers flexibility to control or augment breakthrough behavior. Additionally or alternatively, custom or customizable breakthrough effects of API 401 provide for an improved user experience for end-users experiencing these custom or customizable breakthrough effects.

For example, the client application A 403a provides a first target region to which the electronic device 101 is to apply breakthrough, one or more first criteria to satisfy for applying the breakthrough effect, and the particular breakthrough effect the electronic device 101 is to apply to API 401. Optionally, while client application A 403a is running on the electronic device 101, the API 401 evaluates whether the one or more first criteria received from client application A are satisfied. In accordance with a determination that the one or more first criteria are satisfied, the API 401 applies the breakthrough effect provided by client application A 403a to the first target region provided by client application A 403a.

Similarly, client application B 403b provides a second target region to which the electronic device 101 is to apply breakthrough, one or more second criteria to satisfy for applying the breakthrough effect, and the particular breakthrough effect the electronic device 101 is to apply to API 401. Optionally, while client application B 403b is running on the electronic device 101, the API 401 evaluates whether the one or more second criteria received from client application B are satisfied. In accordance with a determination that the one or more second criteria are satisfied, the API 401 applies the breakthrough effect provided by client application B 403b to the second target region provided by client application B 403b.

Thus, API 401 enables client application A 403a and/or client application B 403b to implement one or more custom breakthrough frameworks that leverage one or more of the modules 402 through 412 of operating system 400. As described above, client application A 403a and/or client application B 403b provide an input to the API 401 that includes identification of (i) a target region in the MR environment, (ii) one or more criteria that, when satisfied, cause breakthrough of the target region, and (iii) the particular breakthrough effects to be applied to the target region in accordance with the one or more provided criteria being satisfied. In some embodiments, as will be described in more detail below, a single client application (e.g., client application A 403a or client application B 403b) provides the API 401 with multiple sets of a target region, one or more criteria, and a breakthrough effect (e.g., a respective set including at least a respective target region, one or more respective criteria, and a respective breakthrough effect). Optionally, the multiple sets include different target regions. Optionally, the multiple sets include a shared target region with different breakthrough effects being applied to the shared target region in accordance with detecting different sets of one or more criteria being satisfied. Moreover, as shown in Fig. 4, for example, multiple client applications (e.g., client application A 403a and client application B 403b) provide one or more inputs to the API 401, optionally concurrently or optionally at different times.

In some embodiments, the input to the API 401 provided by the first client application 403a and/or the second client application 403b includes identification of a target region of the MR environment. Identifying the target region optionally identifies for the API 401 the region of the MR environment to which the breakthrough effect is to be applied. In some embodiments, the target region is a dynamic region in the MR environment that includes a particular real or virtual object. The position of the dynamic region changes due to movement of the real and/or virtual object. As described in further detail below, the operating system 400 tracks the identified real and/or virtual object to apply the breakthrough effect (in accordance with the one or more criteria being satisfied) to the region of the MR environment that includes the identified object in some embodiments. In these embodiments, in response to detecting movement of the real and/or virtual object relative to the MR environment, the electronic device 101 updates the region of the MR environment to which the breakthrough effect is applied. Examples of dynamic objects identified and/or tracked for breakthrough include other electronic devices (e.g., including input devices) in communication with electronic device 101, furniture, real objects with which the user interacts, real objects the electronic device 101 uses as anchors for presenting virtual objects, etc., as described in more detail below.

In some embodiments, the target region is a static region of the MR environment corresponding to a respective location in the physical environment of the electronic device 101 and/or corresponding to a static object (e.g., objects that are fixed in place and not readily portable). In some embodiments, the target region is identified based on including a respective real and/or virtual object and/or in response to receiving an input from the user identifying a region in the physical environment to which breakthrough effects should be applied. For example, client application 403a and/or client application 403b applies a breakthrough effect to a region of the MR environment including an object that does not move in the real environment of the electronic device 101. The operating system 400 optionally identifies the object automatically. Additionally or alternatively, in some embodiments, the electronic device 101 receives an input identifying a location of object in the physical environment. Examples of static objects identified for breakthrough include features such as stairs and/or walls and objects such as built-in or installed furniture and/or appliances. Additionally or alternatively, the client application 403a and/or client application 403b identifies a static region in the MR environment to which to apply breakthrough based on the one or more locations of static virtual content and/or objects.

In some embodiments, identifying the target region includes identifying a size and/or shape a region of the MR environment encompassing a respective object (e.g., including the objects described above). For example, the target region is optionally sphere-, ellipse-, cube-, prism-, organic-, or other geometrically-shaped. The client application 403a and/or client application 403b optionally specifies a size of the target region fixed relative to the MR environment. The client application 403a and/or client application 403b optionally specifies a size of the target region relative to the identified object, such as having a minimum buffer distance around the target object in the region. In some embodiments, identifying and/or tracking the target region in the MR environment includes using one or more mapping techniques, such as simultaneous localization and mapping (SLAM) performed by the operating system 400, such as using image capture module 402, pre-processing module 404, and/or object tracking module 406. For example, the target region can be defined by coordinates in the MR environment indicated in the mapping of the environment.

In some embodiments, the input from the client application 403a and/or client application 403b to the API 401 includes one or more criteria for triggering the breakthrough effect. In this way, for example, the client application 403a and/or client application 403b specifies the conditions under which the API 401 applies or does not apply the breakthrough effect for the respective application. Example criteria include an operating state of the electronic device 101 and/or operating system 400, detecting one or more inputs, a location and/or orientation of the viewpoint of the electronic device 101 in the MR environment, which application or applications are running and/or open on the electronic device 101, proximity of a portion of the user relative to a real and/or virtual object (e.g., the object that defines the target region), proximity of the electronic device to the real and/or virtual object, and/or movement of the user of the electronic device 101 and/or of the electronic device 101 itself.

In some embodiments, criteria related to operating states of the electronic device 101 include automatically defined and/or user defined operation modes, such as a level of immersion with which virtual environment content is presented in favor of representations of the real environment, connectivity state of the electronic device 101 to one or more networks and/or one or more other devices. In some embodiments, criteria related to operating states of electronic device 101 includes available features, such as operation state and/or error status of one or more sensors, one or more display devices, and/or other components included in or otherwise in communication with the electronic device 101, and/or state and/or error status of one or more network connections of the electronic device 101.

In some embodiments, criteria related to inputs includes a criterion that is satisfied in response to detecting a respective input. The respective input is optionally associated with predefined virtual content, such as virtual content that leverages, such as being anchored to, a real object. Example inputs include attention (e.g., including gaze) inputs, air gestures, inputs received using a hardware input device, touch inputs, and/or voice inputs. As another example, the one or more criteria may include a criterion that is satisfied in response to detecting the attention of the user directed to a real object in the physical environment of the electronic device 101.

In some embodiments, criteria related to location include a predefined location of the viewpoint of the user of the electronic device 101 in the MR environment, such as predefined real location and/or a predefined virtual location. In some embodiments, criteria related to location includes a location (e.g., distance and/or orientation) of the viewpoint of the user of the electronic device 101 in the MR environment relative to a predefined real and/or virtual object. Additionally or alternatively, in some embodiments, the one or more criteria include criteria related to motion of the user and/or of the electronic device 101.

In some embodiments, criteria related to which applications are operating and/or open on the electronic device 101 include a criterion that is satisfied when the electronic device 101 is running and/or presenting a user interface of the respective client application 403a and/or client application 403b that provides the input to the API 401. In some embodiments, criteria related to which applications are operating and/or open on the electronic device 101 include one or more criteria related to applications other than the respective client application 403a and/or client application 403b that provide the input to the API 401.

In some embodiments, criteria related to the proximity of a portion of the user relative to a real and/or virtual object includes criteria related to the proximity of one or more hands, the head, one or more legs, and/or the torso of the user relative to the real and/or virtual object. The criteria optionally include a first criterion related to a first portion of the user (e.g., a left hand) and a second criterion related to a second portion of the user, different from the first portion of the user (e.g., a right hand). The criteria optionally include a first criterion related to a first object and a second criterion related to a second object different from the first object, such as evaluating proximity of a portion of a user to a respective object using different threshold distances depending on which object is being evaluated. Likewise, in some embodiments, criteria related to the proximity of the electronic device 101 (e.g., or a component thereof) to a real and/or virtual object includes a first criterion related to a first object and a second criterion related to a second object different from the first object.

In some embodiments, the one or more criteria include criteria related to operation of a real object. For example, the target region includes an electronic device (e.g., an input and/or output device) in communication with electronic device 101. In some embodiments, the criterion is satisfied when the object is configured to perform one or more functions of the electronic device 101, such an input device in communication with the electronic device 101 and configured to provide inputs to the input device and/or an output device in communication with the electronic device 101 and configured to present one or more outputs of the electronic device 101. In some embodiments, the criterion is satisfied when the object is in a respective operating mode, such as a display device (or other device) actively operating, as opposed to being in a standby mode. Examples of other devices that communicate with electronic device 101 include input devices such as keyboards, mice, trackpads, microphones, remote controls, and/or video game controllers and output devices including speakers and/or display devices.

In some embodiments, as described above, the first client application 403a and/or the second client application 403b indicate a particular breakthrough effect to be applied in the input to the API 401. As described in further detail below, in some embodiments, the input includes one or more indications of one or more custom breakthrough characteristics to be applied by the operating system 400. As described in further detail below, in some embodiments, the input includes an indication of a level and/or degree of breakthrough to be applied by the operating system 400, with the operating system 400 controlling the particular characteristics associated with the selected level and/or degree of breakthrough.

As described above, in some embodiments, the input from the client application 403a and/or client application 403b includes one or more indications of particular breakthrough characteristics to be applied to the target region in accordance with the one or more criteria being satisfied. Examples of characteristics include visual alpha, visual geometry, feathering, animation and/or persistence of breakthrough, and/or audio characteristics, described in more detail below.

In some embodiments, the breakthrough characteristic provided by the client application 403a and/or client application 403b includes a visual alpha characteristic. For example, the visual alpha characteristic is a degree of transparency and/or opacity of one or more representations of real content in the target region relative to virtual content in the target region. For example, applying the breakthrough effect includes decreasing the transparency and/or increasing the opacity of the one or more representations of real content and/or increasing the transparency and/or decreasing the opacity of the virtual content.

In some embodiments, the breakthrough characteristic provided by the client application 403a and/or client application 403b includes a geometry characteristic. As described above, in some embodiments, the input to the API 401 optionally specifies a size and/or shape of the region of the MR environment to which the operating system 400 will provide breakthrough. Available shapes in the MR environment to which the operating system 400 will provide breakthrough are listed and described in more detail above. Additionally or alternatively, as described above, the input includes a size of the target region to which the operating system 400 applies the breakthrough. In some embodiments, the shape of the target region includes a corner radius of the shape, such as a cube with sharp corners or a cube with rounded corners having a particular radius. Additionally or alternatively, the one or more geometry characteristics include particular dimensions, including height, width, depth, and/or rotation of the target region to which the operating system 400 should apply the breakthrough.

In some embodiments, the breakthrough characteristics provided by the client application 403a and/or client application 403b include one or more feathering characteristics at the boundary of the target region (e.g., between the portion of the MR environment broken through and the portion of the MR environment not broken through). In some embodiments, the input from the client application 403a and/or client application 403b includes an indication of whether or not feathering is to be applied. In these embodiments, in response to the input including an indication that feathering is to be applied, the operating system 400 applies feathering with predefined characteristics and/or characteristics that the operating system 400 automatically determines, optionally based on one or more criteria controlled by the operating system 400. In some embodiments, the input from the client application 403a and/or client application 403b includes customized values and/or characteristics related to feathering, such as a shape, size, and/or location of the feathering.

In some embodiments, applying the breakthrough effect includes presenting an animation. For example, the electronic device 101 presents an animated transition to initiate and/or cease presenting the breakthrough effect and/or to modify the degree, intensity, and/or extent of the effect while presenting the breakthrough effect. In some embodiments, the animation is a fade in and/or fade out effect. In some embodiments, the animation includes fading in and/or fading out from no breakthrough and/or full breakthrough to an amount of breakthrough in between. In some embodiments, the animation includes gradually changing the value and/or amount of one or more of the characteristics described above. The input provided by the client application 403a and/or client application 403b optionally indicates that an animation should be applied and the operating system 400 determines the particular characteristics of the animation. In some embodiments, the input provided by the client application 403a and/or client application 403b indicates particular characteristics of the animation. Examples of animation characteristics include duration, speed, one or more starting values and/or ending values of one or more characteristics to animate, and/or size and/or location of a region to which the operating system 400 should apply the animation. In some embodiments, the input specifies how the operating system 400 should modify one or more characteristics of the breakthrough effect in response to detecting changes in the one or more detected criteria. For example, the operating system modifies the magnitude of breakthrough in accordance with changes in the proximity of a predefined portion of the user relative to the target region. In some embodiments, the speed and/or rate of animation to animate the initiation of breakthrough and to animate ceasing the breakthrough effect are the same. In some embodiments, the speed and/or rate of animation to animate the initiation of breakthrough and to animate ceasing the breakthrough effect are different from each other. For example, the electronic device 101 presents a short, fast animation to transition from no breakthrough to breakthrough and optionally presents a slower animation to transition from presenting breakthrough to ceasing to present breakthrough.

In some embodiments, the breakthrough characteristic includes one or more audio characteristics. Applying audio breakthrough optionally includes decreasing the volume of audio generated by the electronic device 101 relative to audio being generated by a real object in the physical environment of the electronic device or other environmental audio. In some embodiments, the electronic device 101 applies this audio breakthrough by decreasing the volume of audio generated by the electronic device 101 and/or reducing and/or pausing an adaptive noise cancellation function of an audio output device of the electronic device 101. Applying audio breakthrough optionally includes decreasing the volume of audio associated with the client application 403a and/or client application 403b relative to audio being generated by another application and/or the operating system 400 of the electronic device 101. In some embodiments, the electronic device 101 applies this breakthrough by reducing the output volume of audio content associated with the client application relative to the output volume of audio content associated with the other application and/or the operating system 400.

In some embodiments, rather than the input to the API 401 including particular values for particular breakthrough characteristics, the input indicates a level of breakthrough, and the operating system 400 sets the particular characteristics associated with the available levels of breakthrough. In some embodiments, an available level of breakthrough is "full breakthrough" in which the real content in the target region broken through is presented with maximum emphasis relative to the virtual content in the target region. "Full visual breakthrough" optionally includes maximizing transparency of real content and/or opacity of real content in the target region. "Full audio breakthrough" optionally includes presenting the sound broken through (e.g., optionally spatially in the target region) at a maximum available volume and/or muting sounds associated with virtual content (e.g., optionally spatially in the target region) not broken through.

In some embodiments, the operating system 400 provides one or more intermediate levels of breakthrough. In some embodiments, an available level of breakthrough is "no breakthrough." When the operating system 400 does not apply breakthrough, the operating system 400 optionally presents the virtual content in the target region or in front of the target region with maximum available emphasis relative to real content in the target region. Intermediate levels of breakthrough optionally include applying one or more of the breakthrough characteristics described above with reduced magnitude and/or to a smaller portion of the target region than those applied as part of full breakthrough.

In some embodiments, the emphasis of the virtual content relative to the real content is based on a level of immersion set by the operating system 400, independent from any breakthrough effects the operating system 400 applies. For example, "full immersion" includes presenting a virtual environment that occludes the one or more representations of the real environment of the electronic device 101. As another example, "no immersion" includes presenting virtual objects in a three-dimensional environment that includes one or more representations of the real environment, such as to simulate those virtual objects being in the real environment. Levels of immersion between full immersion and no immersion are possible. For example, at intermediate levels of immersion, the operating system 400 presents the virtual environment in some portions of the MR environment and presents representations of the real environment in other portions of the MR environment. As another example, at intermediate levels of immersion, the operating system 400 presents the virtual environment with transparency that allows representations of the real environment to be at least partially visible through the virtual environment. Thus, in some situations, when the electronic device 101 presents the virtual content with an intermediate level of immersion and/or no immersion, the electronic device 101 presents some representations of real content even without applying breakthrough to those representations of real content.

Returning to Fig. 4, the operating system 400 includes image capture module 402, pre-processing module 404, object tracking module 406, and object anchoring module 408 configured to provide one or more inputs to API 401, and breakthrough module 410 and/or image blending module 412 configured to receive one or more inputs from API 401. In some embodiments, one or more of the modules 402 through 412 include one or more components illustrated in Fig. 2, including but not limited to one or more processors 218, one or more memories 220, communication circuitry 222, and/or one or more communication buses. These modules will now be described with additional detail.

As shown in Fig. 4, operating system 400 optionally includes image capture module 402. Image capture module 402 optionally includes hardware configured to capture one or more images of the real environment of the electronic device 101, such as one or more cameras, radar, lidar, and/or range sensors. For example, image capture module 402 in Fig. 4 includes the one or more image sensors 206 described above with reference to Fig. 2. In some embodiments, the image capture module 402 includes software configured to control the image capturing hardware and/or to transmit the captured images to other modules of the operating system 400, including API 401, and/or to applications running on the electronic device 101. In some embodiments, the image capture module 402 provides one or more captured images as an input to the API 401.

Operating system 400 optionally includes pre-processing module 404. In some embodiments, the pre-processing module 404 includes circuitry and/or software configured to process one or more images captured by the image capture module 402. For example, the pre-processing module 404 includes software configured to analyze the images to identify one or more objects in the real environment of the electronic device 101. The pre-processing module 404 optionally uses one or more techniques such as machine learning and/or semantic understanding to identify one or more objects captured in the images. In some embodiments, a captured image is segmented and a large language model is used to classify objects and/or identify the target objects identified by the client application (customized objects for breakthrough) or the operating system (e.g., people, user's hands for breakthrough). In some embodiments, the pre-processing module 404 includes one or more processors, memory, portions thereof (e.g., shared with other modules of operating system 400 and/or electronic device 101), and/or non-transitory computer readable storage media storing the one or more pre-processing programs described herein. In some embodiments, the pre-processing module 404 provides information about the captured images as an input to the API 401.

Operating system 400 optionally includes object tracking module 406. In some embodiments, the object tracking module 406 includes circuitry and/or software configured to track one or more locations of one or more real objects in the real environment of the electronic device 101. For example, the object tracking module 406 includes software configured to identify and store the one or more locations of the one or more real objects relative to the MR environment, thus allowing the operating system 400 to apply breakthrough effects to objects moving relative to the viewpoint of the user in the MR environment. In some embodiments, the object tracking module 406 includes one or more processors, memory, portions thereof (e.g., shared with other modules of operating system 400 and/or electronic device 101), and/or non-transitory computer readable storage media storing the one or more object tracking programs described herein. In some embodiments, the object tracking module 406 includes orientation sensors 210 and/or location sensors 204 shown in Fig. 2. These components optionally enable the object tracking module 406 to track the one or more locations of the one or more objects in the MR environment relative to the location of the electronic device 101, including accounting for movement of the electronic device 101. In some embodiments, the object tracking module 406 provides the one or more locations of the one or more objects identified in the one or more inputs from the client application 403a and/or client application 403b as an input to the API 401. In some embodiments, the API provides object tracking module 406 with instructions for which objects to track in the MR environment.

Operating system 400 optionally includes object anchoring module 408. In some embodiments, the object anchoring module 408includes circuitry and/or software configured to present one or more virtual objects as being anchored to one or more real objects in the MR environment of the electronic device 101. Presenting a virtual object as being anchored to a representation of a real object in the MR environment optionally includes identifying a surface of the real object and presenting the virtual object in the MR environment at a location (or with relative to a location) in the MR environment and/or with visual effects, such as simulated shadows, that simulates the appearance of the virtual object resting on and/or being attached to the real object. Thus, in some embodiments, the object anchoring module 408 is in communication with the pre-processing module to identify a real object to which a virtual object is anchored to ensure presentation of the virtual content with respect to the real object. Additionally or alternatively, in some embodiments, the object anchoring module 408 is in communication with the object tracking module 406 or the operating system uses information from the object tracking module 406 and the object anchoring module 408 to understand the position of the real object used as an anchor and to update MR environment to maintain the location of the virtual object in the MR environment relative to the anchoring real object in accordance with movement of the real object. In some embodiments, the object anchoring module 408 includes one or more processors, memory, portions thereof (e.g., shared with other modules of operating system 400 and/or electronic device 101), and/or non-transitory computer readable storage media storing the one or more object anchoring programs described herein. In some embodiments, the object anchoring module 408 provides indications of objects identified in the one or more inputs from the client application 403a and/or client application 403b to which the electronic device 101 anchors virtual content as an input to the API 401. In some embodiments, the identification of an anchoring object is provided to the API 401 when necessary to evaluate breakthrough criteria described herein.

As mentioned above, in some embodiments, the image capture module 402, pre-processing module 404, object tracking module 406, and/or object anchoring module 408 are in communication with each other or with some subset of these modules. In some embodiments, image capture module 402 optionally provides one or more images to pre-processing module 404 so the pre-processing module 404 is able to process images of the real environment of the electronic device 101. Additionally or alternatively, the image capture module 402 provides one or more images to the object tracking module 406 and/or object anchoring module 408 as inputs to one or both of these modules to facilitate performance of one or both of these modules' functions. Pre-processing module 404 is optionally in communication with the object tracking module 406 to provide the object tracking module 406 with analysis of images of the real environment, such as identifying real objects that the object tracking module 406 tracks. Pre-processing module 404 is optionally in communication with the object anchoring module 408 to provide the object anchoring module 408 with analysis of the images of the real environment, such as identifying real objects to which the object anchoring module 408 anchors virtual objects. Object tracking module 406 is optionally in communication with object anchoring module 408 to provide the object anchoring module 408 with one or more updated indications of the one or more locations of one or more real objects to which the object anchoring module 408 anchors virtual objects. Additionally or alternatively, object anchoring module 408 can provide object tracking module 406 with information regarding which objects in the MR environment are used as anchors to enable tracking of anchoring objects (e.g., to prioritize tracking of such objects in the MR environment, to reduce processing load to track other objects, etc.).

Operating system 400 optionally includes breakthrough module 410. In some embodiments, the breakthrough module 410 includes circuitry and/or software configured to perform one or more functions associated with breakthrough of real objects in the MR environment. In some embodiments, breakthrough module 410evaluates whether breakthrough criteria received from the client application via the API are satisfied for a tracked object identified by the operating system and/or the client application via the API. In some embodiments, breakthrough module 410 identifies a portion of the MR environment to apply the one or more breakthrough effects breakthrough module 410, and/or determining particular breakthrough characteristics to be included when applying the one or more breakthrough effects. In some embodiments, the API 401 performs one or more of these functions (e.g., evaluating criteria and/or identifying a portion of the MR environment to apply one or more breakthrough effects), and outputs one or more indications of the functions to the breakthrough module 410 (e.g., providing an indication to apply breakthrough, where to apply breakthrough, and how to apply breakthrough whether system defined or customized per the client application).

In some embodiments, the breakthrough module 410 is configured to identify one or more display regions (e.g., one or more pixels or groups of pixels) of the one or more display devices where presentation of the MR environment will be affected by the breakthrough effects. For example, the breakthrough module 410 provides the image blending module 412 with one or more display regions and/or pixels for the image blending module 412 to apply image blending, as described below. For example, the breakthrough module 410 includes software configured to perform one or more of these functions. In some embodiments, the breakthrough module 410 includes one or more processors, memory, portions thereof (e.g., shared with other modules of operating system 400 and/or electronic device 101), and/or non-transitory computer readable storage media storing the one or more object tracking programs described herein. In some embodiments, the breakthrough module 410 receives, from the API 401, one or more of an indication of whether the one or more criteria provided by the client application 403a and/or client application 403b are satisfied, and indication of the one or more criteria that breakthrough module 410 uses to evaluate whether to apply breakthrough, an indication of the target region provided by the client application 403a and/or client application 403b, and/or a level and/or characteristics of breakthrough to be applied.

Operating system 400 optionally includes image blending module 412. In some embodiments, the image blending module 412 includes circuitry and/or software configured to present the MR environment including portions of virtual content and portions of real content. In some embodiments, the MR environment includes virtual content displayed at locations outside of the target region to which the one or breakthrough effects are applied and real content displayed at locations in or corresponding to the target region. In some embodiments, the image blending module 412 modifies portions of one or more images of the MR environment at the border between locations at which the electronic device 101 presents real content and locations at which the electronic device 101 presents virtual content. The borders include the breakthrough border corresponding to the application of breakthrough effects described herein. In some embodiments, the image blending module 412 modifies a plurality of pixels to achieve the desired image blending effect. In some embodiments, the image blending module 412 receives from the breakthrough module 410 one or more indications of one or more locations in the MR environment at which to apply the image blending, at which to display real content, and/or at which to display virtual content. In some embodiments, the image blending module 412 produces one or more images of real content and virtual content overlaid on one another, such as displaying the real content and/or the virtual content at shared locations with increased transparency and/or translucency. In some embodiments, the image blending module 412 receives from the API 401 and/or from the breakthrough module 410 one or more of an indication of one or more locations at which to apply image blending and/or one or more indications of image blending techniques to apply.

In implementations that include presenting a view of the real environment through a transparent portion of the display device (e.g., using true or real passthrough), the image blending module adjusts characteristics with which the electronic device presents virtual content and/or a degree to which the display device occludes the real environment to control the visual emphasis of the virtual content relative to the real content in the MR environment. In some embodiments, the image blending module 412 adjusts the visual emphasis of virtual content by adjusting the brightness and/or color used to display the virtual content. In some embodiments, the image blending module 412 adjusts the visual emphasis of the real content by adjusting the intensity and/or colors of light that pass through the transparent portions of the display device. In some embodiments, the image blending module 412 blends the light allowed to pass through the display device to allow the user to see the real environment with displayed light that presents virtual content in the MR environment.

In implementations that include displaying representations of the real environment actively with the display device (e.g., using virtual or video passthrough), the image blending module adjusts characteristics with which the electronic device presents virtual content and/or characteristics with which the electronic device presents real content to control the visual emphasis of the virtual content relative to the real content in the MR environment. In some embodiments, the image blending module 412 adjusts the visual emphasis of virtual content by adjusting the brightness and/or color used to display the virtual content, and adjusts the visual emphasis of real content by adjusting the brightness and/or color used to display the real content. In some embodiments, the image blending module 412 blends the images of virtual content with images of real content to generate a blended image of real content and virtual content in the MR environment.

In some embodiments, the API 401 enables client application 403a and/or client application 403b to implement customized breakthrough effects that leverage modules 402 through 412 of the operating system 400. The client application 403a and/or application 403b provide the API 401 with an input including the target region, one or more breakthrough criteria, and/or one or more breakthrough effects to be applied to the target region in accordance with a determination that the breakthrough criteria are satisfied. The API 401 optionally includes software to determine whether the one or more criteria are satisfied based on information received from the image capture module 402, pre-processing module 404, object tracking module 406, and/or object anchoring module 408. The API 401 optionally includes software configured to identify the target region, including recognizing an object associated with the target region and/or identifying a location of the target region within the MR environment, based on information received from the image capture module 402, pre-processing module 404, object tracking module 406, and/or object anchoring module 408. The API 401 optionally includes software configured to apply the breakthrough effects, including customized breakthrough characteristics or a predefined level of breakthrough. Optionally, the API 401 communicates instructions to the breakthrough module 410 and/or the image blending module 412 to present the MR environment with the customized breakthrough effects provided by the client application 403a and/or client application 403b.

As described in further detail herein, client application A 403a and client application B 403b optionally use API 401 to apply different breakthrough customizations while running on the electronic device 101. In some embodiments, the breakthrough frameworks of client application A 403a and client application B 403b differ in the target region, criteria, and/or breakthrough effects. For example, client application A 403a and client application 403b apply breakthrough effects to different target regions of the MR environment. Additionally or alternatively, for example, client application A 403a and client application B 403b use different sets of criteria to determine whether to apply breakthrough effects to a respective target region. Additionally or alternatively, for example, client application A 403a and client application B 403b apply different breakthrough effects, including different customized breakthrough characteristics and/or different predefined levels of breakthrough. In some embodiments, the breakthrough frameworks of client application A 403a and client application B 403b are similar in the target region, criteria, and/or breakthrough effects.

In some embodiments, client application 403a and/or client application 403b call API 401, including providing the API 401 with a set of a target region, one or more breakthrough criteria, and one or more breakthrough effects. In some embodiments, the client applications provide more than one set, with each set including a target region, one or more breakthrough criteria, and one or more breakthrough effects. In some embodiments, it is possible for one of the client application 403a or client application 403b to provide the API 401 with multiples sets of a target region, breakthrough criteria, and a breakthrough effect. In some embodiments, client application 403a and/or client application 403b call the API 401 at installation, including instructions to use the custom breakthrough framework when the respective client application 403a or client application 403b is running on the electronic device 101. In some embodiments, additionally or alternatively, client application 403a and/or client application 403b call the API 401 when launched by the electronic device 101. In some embodiments, additionally or alternatively, client application 403a and/or client application 403b call the API 401 at various points while running on the electronic device 101. For example, client application 403a and/or client application 403b include software that causes the breakthrough effects to be applied to change over time based on the operating state of the application and/or based on data collected by the electronic device 101. For example, prior to displaying a virtual object to be anchored to a real object, the client application 403a and/or client application 403b forgoes calling API 401 with instructions to apply breakthrough to the real object. In this example, in response to displaying the virtual object anchored to the real object, the client application 403a and/or client application 403b calls API 401 with instructions for applying customized breakthrough to the real object in accordance with a determination that certain criteria are satisfied.

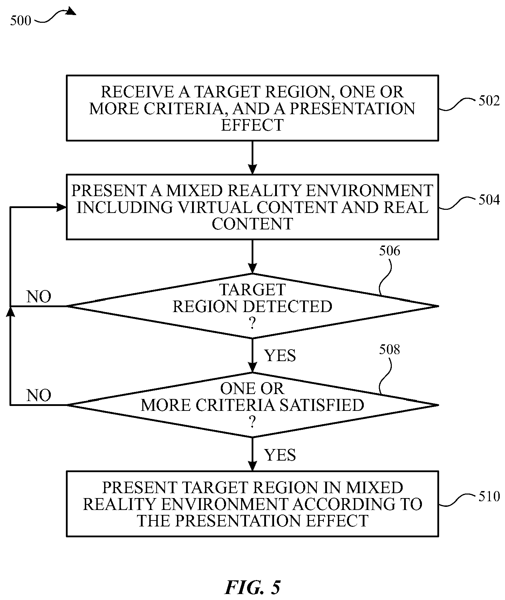

Fig. 5 is a flow chart of an example method 500 of applying customized breakthrough effects in accordance with some embodiments of the disclosure. In some embodiments, electronic device 101 performs method 500 using operating system 400 and/or client application 403a and/or client application 403b as described herein. Optionally, one or more steps of the method 500 are programmed in instructions stored using non-transitory computer readable storage media.

At 502, the electronic device 101 receives a target region, one or more criteria and one or more presentation effects from a client application 403a and/or client application 403b. In some embodiments, API 401 receives the target region, one or more criteria and one or more presentation effects. As described herein, in some embodiments, the API 401 receives multiple sets of a target region, one or more criteria and one or more presentation effects from one or more client applications. The client applications provide the input, in some embodiments, at installation, start up, and/or during runtime.

At 504, the electronic device 101 presents a mixed reality environment including virtual content and real content. In some embodiments, the virtual content includes one or more user interfaces, one or more content items, and/or other content of the one or more client application (e.g., client application 403a and/or client application 403b) and/or of the operating system 400. In some embodiments, the real content includes one or more representations of one or more real objects in the physical environment of the electronic device 101 either displayed or made visible through a transparent portion of the display device as described herein. In some embodiments, the electronic device presents one or more portions of real content with reduced visual emphasis in favor of displaying virtual content at locations in the MR environment corresponding to the virtual content and the real content, optionally including forgoing presenting one or more portions of real content. In some embodiments, when criteria for presenting portions of the environment with one or more breakthrough effects are not satisfied, the electronic device 101 presents the MR environment without breakthrough effects. In some embodiments, when criteria for presenting portions of the environment with one or more breakthrough effects are satisfied, the electronic device 101 presents the MR environment with the breakthrough effects. In some situations, presenting the MR environment includes presenting real content without virtual content in some instances and/or presenting virtual content without real content in some instances without departing from the scope of the disclosure. In some embodiments, the electronic device 101 uses the image capture module 402 to capture images of the real environment of the electronic device 101 to present representations of real objects in the MR environment.

At 506, the electronic device 101 determines whether the target region is detected in the MR environment. As described above, in some embodiments, the target region provided by client application 403a and/or client application 403b is a region of the MR environment that includes a respective real object. In some embodiments, the electronic device 101 uses pre-processing module 404 to identify the respective real object in one or more images captured using the image capture module 402 and/or tracks the respective real object using object tracking module 406. In some embodiments, the target region corresponds to a user and/or client application defined area of the environment. In response to detecting the target region, the method 500 proceeds to 508. When the target region is not detected, the method 500 repeats, including monitoring the MR environment for detection of the target region.

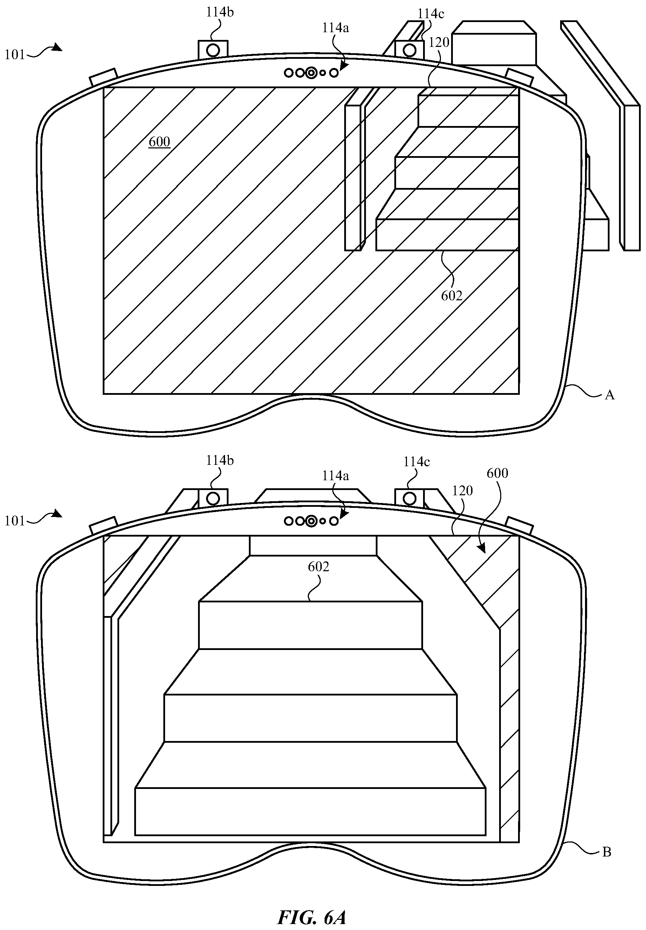

At 508, the electronic device 101 determines whether the one or more criteria are satisfied. In some embodiments, the electronic device 101 evaluates the one or more criteria at API 401 and/or breakthrough module 410 using one or more inputs from one or more of image capture module 402, pre-processing module 404, object tracking module 406, and/or object anchoring module 408. The functions of these modules in evaluating the one or more criteria are described in more detail above with reference to Fig. 4. Particular examples of sets of criteria that may be provided by client applications and how the electronic device 101 evaluates those example sets of criteria are described in more detail below with reference to Figs. 6A-6D. In accordance with a determination that the one or more criteria are satisfied, the method 500 proceeds to block 510. In accordance with a determination that the one or more criteria are not satisfied, method 500 repeats, optionally including monitoring the MR environment for detection of the target region and/or evaluating whether or not the one or more criteria are satisfied.

At 510, in accordance with a determination that the one or more criteria are satisfied, the electronic device 101 presents the target region in the MR environment according to the presentation effect. In some embodiments, the presentation effect is a breakthrough effect, including but not limited to visual breakthrough and/or audio breakthrough. In some embodiments, the electronic device 101 uses breakthrough module 410 and/or image blending module 412 as described above to apply the presentation effect to the target region. Visual breakthrough optionally includes increasing the visibility of a view of real content through a transparent portion of a display device. Visual breakthrough optionally includes displaying a representation of real content with a display device. Visual breakthrough optionally includes forgoing rendering representations of virtual content and/or virtual objects within the volume of the target region. For example, the presentation effect specified in the input to the API includes forgoing rendering representations of virtual content and/or virtual objects within the volume of the target region.

In some embodiments, method 500 (Fig. 5) is performed at a first computer system (as described herein) by an application that is different from a system process. In some embodiments, the instructions of the application, when executed, control the first computer system to perform method 500 (Fig. 5) by calling an application programming interface (API) provided by the system process. In some embodiments, the application performs at least a portion of method 500 without calling the API.

In some embodiments, the application can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application.

In some embodiments, the application is an application that is pre-installed on the first computer system at purchase (e.g., a first party application). In other embodiments, the application is an application that is provided to the first computer system via an operating system update file (e.g., a first party application). In other embodiments, the application is an application that is provided via an application store. In some implementations, the application store is pre-installed on the first computer system at purchase (e.g., a first party application store) and allows download of one or more applications. In some embodiments, the application store is a third party application store (e.g., an application store that is provided by another device, downloaded via a network, and/or read from a storage device). In some embodiments, the application is a third party application (e.g., an app that is provided by an application store, downloaded via a network, and/or read from a storage device). In some embodiments, the application controls the first computer system to perform method 500 (Fig. 5) by calling an application programming interface (API) provided by the system process using one or more parameters.

In some embodiments, at least one API is a software module (e.g., a collection of computer-readable instructions) that provides an interface that allows a different set of instructions (e.g., API calling instructions) to access and use one or more functions, methods, procedures, data structures, classes, and/or other services provided by a set of implementation instructions of the system process. The API can define one or more parameters that are passed between the API calling instructions and the implementation instructions.

The following table includes example breakthrough frameworks the electronic device 101 can implement using the one or more techniques described herein. Additional examples are possible without departing from the scope of the disclosure.

**Table of Examples**

| **Target** | **Criteria** | **Breakthrough Effect** |
|---|---|---|
| User-defined physical region including stairs | Threshold distance from device | Full breakthrough of target region |
| Physical object that doesn't interact with virtual content | Object is touching the user's hand | Full breakthrough of target region and/or user's hand |
| Physical object to which virtual content is anchored | Virtual content displayed anchored to a surface of the object without attention of user directed to virtual object | Partial or full breakthrough of target region. Client application specifies target region, such as a portion of the object, the entire object, or a volume of the environment including the object |
| Physical object to which virtual content is anchored | Virtual content displayed anchored to a surface of the object and attention of user directed to the virtual content | Partial or full breakthrough of target region, including increased breakthrough and/or increased size of target region |
| Input device | Connection to electronic device, user's hands within threshold distance of input device | Partial breakthrough of input device |
| Input device | Connection to electronic device and/or user's hands touching input device and/or electronic device input focus directed to element that receives input using input device | Full breakthrough of input device |

Figs. 6A-6D illustrate example breakthrough frameworks according to some embodiments of the disclosure. In some embodiments, an electronic device 101 implements one or more of the examples shown in Figs. 6A-6D using operating system 400 including API 401 described above with reference to Fig. 4 and/or method 500 described above with reference to Fig. 5.

Fig. 6A illustrates an example of breakthrough for a physical region in the real environment of the electronic device 101. For example, the physical region in the environment corresponds to an object 602 (e.g., stairs) included a first view (view "A") and a second view (view "B") of the environment. As shown in the first view of Fig. 6A without breakthrough, the object 602 is occluded by the virtual content (represented by shading) in MR environment 600. However, as shown in the second view of Fig. 6A, when a breakthrough effect is applied, the electronic device 101 reduces the occlusion of the object 602 by the virtual content (represented by the absence of shading over the real object 602) in the MR environment. This type of breakthrough can be applied to real objects irrespective of whether the user, electronic device 101, and/or one or more virtual objects included in the MR environment 600 interact with the object 602. In some circumstances, for some objects, this type of breakthrough can provide situation awareness regarding known hazards in the physical environment.

A client application (e.g., client application 403a and/or client application 403b in Fig. 4) can implement breakthrough according to the example in Fig. 6A by providing the API 401 with an input including an indication of a target region including the object, an indication of one or more criteria for presenting the target region with a respective breakthrough effect, and an indication of the respective breakthrough effect to be applied.

In some embodiments, the client application 403a and/or client application 403b includes an indication of a target region in the input to the API 401. For example, the target region is a region of the MR environment including a predefined real object 602. Although the object 602 in Fig. 6A is a staircase, other real objects are possible. In some embodiments, the input includes a request for the operating system 400 to identify one or more particular objects (or one or more types of object) in the real environment of the electronic device 101, for example, using the pre-processing module 404 in Fig. 4. Example inputs that would correspond to the object 602 in Fig. 6A include inputs identifying the particular staircase in Fig. 6A, any staircase, staircases and ramps, built-in furniture (e.g., staircases, counters, cabinets, walls), and/or furniture. In some embodiments, the client application 403a and/or client application 403b includes a user interface that requests the user identify a region in the real environment according to a set of instructions provided to the user, and the input to the API 401 includes an indication of the region of the MR environment that includes user-identified region in the real environment. For example, the client application 403a and/or client application 403b instructs the user to identify a region of the MR environment that includes one of the examples of objects just listed. In some embodiments, the input applies to multiple target regions in the MR environment.

In some embodiments, the input to the API 401 from client application 403a and/or client application 403b includes an indication of one or more criteria that, when satisfied, cause the electronic device 101 to present the target region with the breakthrough effect. In some embodiments, the one or more criteria are optionally satisfied when the target region including the object 602 is visible in the MR environment from the viewpoint of the user of the electronic device 101. In some embodiments, the one or more criteria include a criterion that is satisfied when the electronic device 101 is within a threshold distance of the object 602, such as 1 meter, 2 meters, 5 meters, or 10 meters. In some embodiments, the one or more criteria include criteria satisfied based on movement of the electronic device 101, such as a criterion that is satisfied when the electronic device 101 is moving at least a threshold speed, duration, or distance; rotating; and/or moving towards object 602.

In some embodiments, the input to the API 401 from the client application 403a and/or client application 403b includes an indication of the one or more breakthrough effects to be applied in accordance with the one or more criteria being satisfied. As described in more detail above, in some embodiments, the indication of the breakthrough in the input is a level of breakthrough with particular effects managed by the operating system 400 (e.g., using breakthrough module 410). For example, the input specifies full breakthrough in which the electronic device 101 presents a representation of the object 602 that is not occluded by virtual content in the MR environment. Optionally, full breakthrough includes forgoing rendering virtual content in the volume at which the real object 602 is located. As another example, the input specifies partial breakthrough in which the target region of the MR environment in which the electronic device 101 presents a representation of the object 602 with portions of virtual content overlaid on the representation of the object 602. For example, the electronic device 101 displays the representation of the object 602 and/or the virtual content with less than full opacity such that virtual content and real content are both visible at respective locations within the target region of the MR environment 600.

In some embodiments, the input provided to the API 401 by the client application 403a and/or client application 403b indicates particular presentation effects to apply when presenting the breakthrough effect. For example, the input specifies a breakthrough effect including presenting the representation of the object 602 with increased opacity and portions of the virtual content in the target environment with decreased opacity when presenting the breakthrough effect in the first view in Fig. 6A compared to not presenting the breakthrough effect in the second view of Fig. 6A. As another example, presenting the representation of object 602 with the breakthrough effect includes forgoing rendering the virtual content at the volume of the environment including the object 602, thereby increasing visual prominence of the object 602 relative to the virtual content at the location of the object 602.

Additionally or alternatively, the input provided by the client application 403a and/or client application 403b to the API 401 specifies a size and/or shape of the target region to which the electronic device 101 should apply the breakthrough. As shown in the second view of Fig. 6A, the target region is optionally shaped like the object 602, optionally with a minimum distance of space around the boundary of the object 602. Alternatively, in some embodiments, the target region is oval-shaped or has another geometric shape.

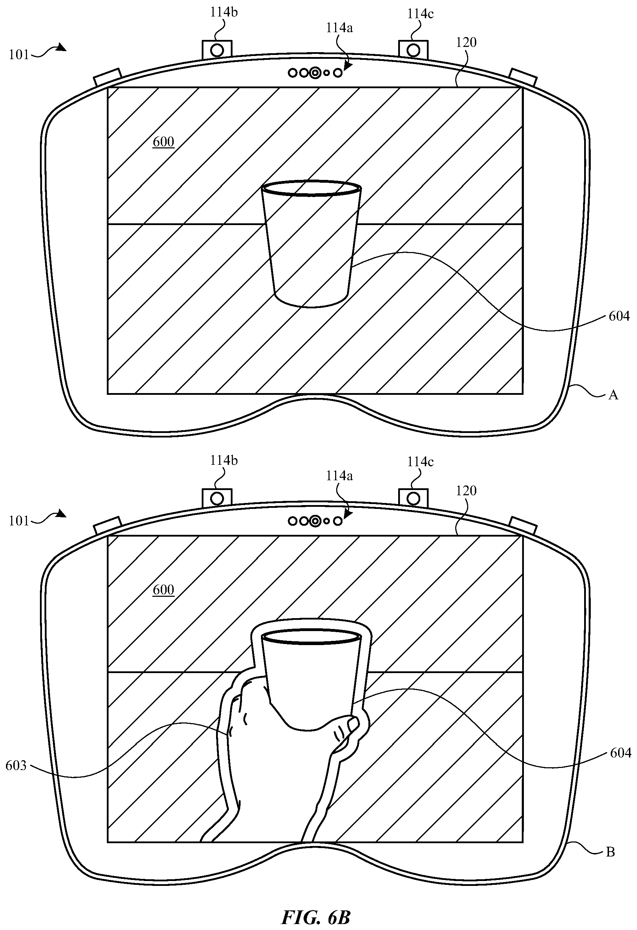

Fig. 6B illustrates an example of breakthrough for a real object 604 in the real environment of the electronic device 101 in accordance with a determination that a user of the electronic device 101 interacts with the object 604. For example, the target region includes real object 604 (e.g., a cup) included a first view (view "A") and a second view (view "B") of the environment 600 in Fig. 6B. As shown in the first view of Fig. 6B without breakthrough, the object 604 is occluded by the virtual content (represented by shading) in MR environment 600. However, as shown in the second view of Fig. 6B, when a breakthrough effect is applied, the electronic device 101 reduces the occlusion of the object 604 by the virtual content (represented by the absence of shading over the object 604) in the MR environment 600. This type of breakthrough can be applied to real objects in response to detecting the user interact with the object irrespective of electronic device 101 and/or one or more virtual objects included in the MR environment 600 interacting with the object 602. This type of breakthrough can enable the user to interact with the real environment while using electronic device 101.

A client application (e.g., client application 403a and/or client application 403b in Fig. 4) can implement breakthrough according to the example in Fig. 6B by providing the API 401 with an input including an indication of a target region including the object, an indication of one or more criteria for presenting the target region with a respective breakthrough effect, and an indication of the respective breakthrough effect to be applied.

In some embodiments, the client application 403a and/or client application 403b includes an indication of a target region in the input to the API 401. For example, the target region is a region of the MR environment including a predefined real object 604. Although the object 604 in Fig. 6B is a cup, other real objects are possible. In some embodiments, the input includes a request for the operating system 400 to identify the boundaries of the object 604, for example, using the pre-processing module 404 in Fig. 4. As described in more detail below, this type of breakthrough is optionally characterized by the interaction of the user of the electronic device 101 with the object, but in some embodiments, the input provided by the client application 403a and/or client application 403b optionally includes an indication of one or more objects (or one or more object types) to which this breakthrough applies and/or one or more objects (or one or more object types) to which the breakthrough does not apply. Example inputs that would correspond to the object 604 in Fig. 6B include inputs identifying the particular cup in Fig. 6B, any cup, any drinkware or dish, handheld object, any object within a certain range of sizes, and/or any real object. In some embodiments, the client application 403a and/or client application 403b includes a user interface that requests the user identify one or more objects in the real environment according to a set of instructions provided to the user, and the input to the API 401 includes an indication of one or more regions of the MR environment that include one or more user-identified objects in the real environment. For example, the client application 403a and/or client application 403b instructs the user to identify objects they wish to be able to see in response to the electronic device 101 detecting user interaction with those objects. In some embodiments, the input applies to multiple objects associated with multiple target regions in the MR environment 600.

In some embodiments, the input to the API 401 from client application 403a and/or client application 403b includes an indication of one or more criteria that, when satisfied, cause the electronic device 101 to present the target region with the breakthrough effect. In some embodiments, the one or more criteria are optionally satisfied when the electronic device 101 detects the hand 603 (e.g., either hand or a particular one of the right or left hand) of the user within a threshold distance of the object 604, such as 1, 2, 3, 5 or 10 centimeters. In some embodiments, the one or more criteria require detecting a particular hand shape and/or gesture, such as a hand shape or gesture indicating the user is attempting to grab object 604 while within a threshold distance of the object. In some embodiments, the one or more criteria are satisfied when the electronic device 101 detects the user touching the object 604 with hand 603.

In some embodiments, the input to the API 401 from the client application 403a and/or client application 403b includes an indication of the breakthrough effect(s) to be applied in accordance with the one or more criteria being satisfied. As described in more detail above, in some embodiments, the indication of the breakthrough in the input is a level of breakthrough with particular effects managed by the operating system 400 (e.g., using breakthrough module 410). For example, the input specifies full breakthrough in which the electronic device 101 presents a representation of the object 604 that is not occluded by virtual content in the MR environment. Optionally, full breakthrough includes forgoing rendering virtual content in the volume at which the real object 604 is located. As another example, the input specifies partial breakthrough in which the target region of the MR environment in which the electronic device 101 presents a representation of the object 604 with portions of virtual content overlaid on the representation of the object 604. For example, the electronic device 101 displays the representation of the object 604 and/or the virtual content with less than full opacity such that virtual content and real content are both visible at respective locations within the target region of the MR environment 600.

In some embodiments, the input provided to the API 401 by the client application 403a and/or client application 403b indicates particular presentation effects to apply when presenting the breakthrough effect. For example, the input specifies a breakthrough effect including presenting the representation of the object 604 with increased opacity and portions of the virtual content in the target environment with decreased opacity when presenting the breakthrough effect in the first view in Fig. 6B compared to not presenting the breakthrough effect in the second view of Fig. 6B. As another example, presenting the representation of object 604 with the breakthrough effect includes forgoing rendering the virtual content at the volume of the environment including the object 604, thereby increasing visual prominence of the object 604 relative to the virtual content at the location of the object 604.

Additionally or alternatively, the input provided by the client application 403a and/or client application 403b to the API 401 specifies a size and/or shape of the target region to which the electronic device 101 should apply the breakthrough. As shown in the second view of Fig. 6B, the target region is optionally shaped like the object 604, optionally with a minimum distance of space around the boundary of the object 604. Alternatively, in some embodiments, the target region is oval-shaped or has another geometric shape.

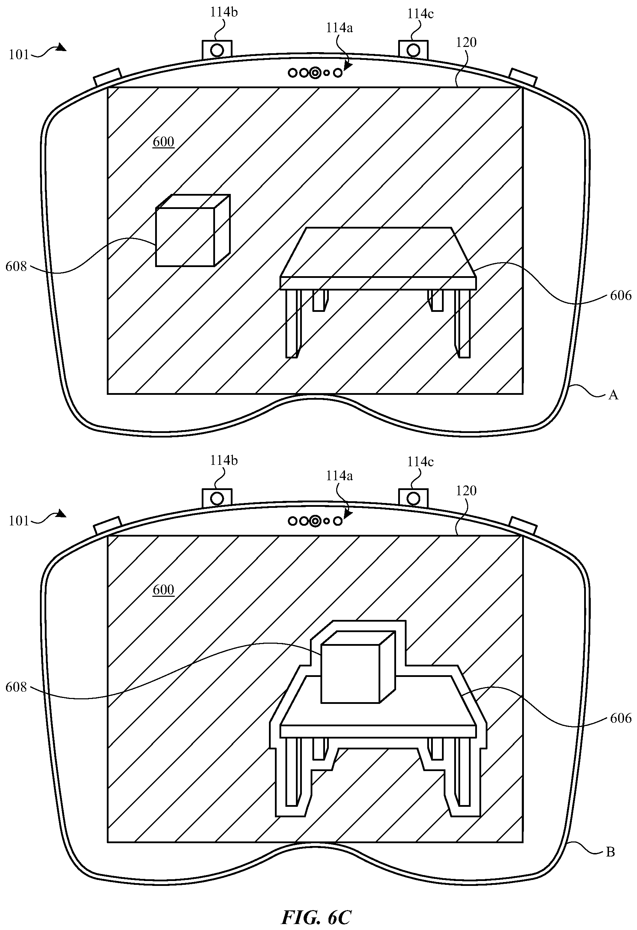

Fig. 6C illustrates an example of breakthrough for a real object 606 in the real environment of the electronic device 101 to which a virtual object 608 is anchored. For example, the target region includes real object 606 (e.g., a table) included a first view (view "A") and a second view (view "B") of the environment 600 in Fig. 6C. In some embodiments, the virtual object 608 is a two-dimensional or three-dimensional virtual object, optionally corresponding to a user interface, user interface element, content item, and/or other object. As shown in the first view of Fig. 6C without breakthrough, the object 606 is occluded by the virtual content (represented by shading) in MR environment 600. However, as shown in the second view of Fig. 6C, when a breakthrough effect is applied, the electronic device 101 reduces the occlusion of the object 604 by the virtual content (represented by the absence of shading over the object 604) in the MR environment 600. This type of breakthrough can be applied to real objects in response to detecting a virtual object anchored to the real object. This type of breakthrough can enable the user to interact with the real environment and/or avoid unintentional contact with the real object 606 when interacting with the virtual object 608 while using electronic device 101.

A client application (e.g., client application 403a and/or client application 403b in Fig. 4) can implement breakthrough according to the example in Fig. 6C by providing the API 401 with an input including an indication of a target region including the object, an indication of one or more criteria for presenting the target region with a respective breakthrough effect, and an indication of the respective breakthrough effect to be applied.

In some embodiments, the client application 403a and/or client application 403b includes an indication of a target region in the input to the API 401. For example, the target region is a region of the MR environment including a real object 606 to which virtual content 608 is anchored. Although the object 606 in Fig. 6C is a table, other real objects are possible. In some embodiments, the electronic device 101 identifies the target region based on identifying that the virtual object 608 is being presented as anchored to real object 606, for example, using object anchoring module 408 described above with reference to Fig. 4. In some embodiments, identifying the target region includes identifying a shape and/or location of the real object 606 to which the virtual object 608 is anchored.

In some embodiments, the input to the API 401 from client application 403a and/or client application 403b includes an indication of one or more criteria that, when satisfied, cause the electronic device 101 to present the target region with the breakthrough effect. In some embodiments, the one or more criteria are optionally satisfied when the electronic device 101 detects virtual object 608 anchored to real object 606. In some embodiments, the one or more criteria additionally or alternatively include criteria related to the distance between the electronic device 101 and the real object 606, the attention (e.g., including gaze and/or a gaze proxy) of the user being directed to the real object 606 and/or the virtual object 608, and/or interaction with the virtual object 608.

In some embodiments, the input to the API 401 from the client application 403a and/or client application 403b includes an indication of the one or more breakthrough effects to be applied in accordance with the one or more criteria being satisfied. As described in more detail above, in some embodiments, the indication of the breakthrough in the input is a level of breakthrough with particular effects managed by the operating system 400 (e.g., using breakthrough module 410). For example, the input specifies full breakthrough in which the electronic device 101 presents a representation of the object 606 that is not occluded by virtual content in the MR environment, except for portions occluded by the virtual object 608 anchored to the real object 606. Optionally, full breakthrough includes forgoing rendering virtual content in the volume at which the real object 606 is located. As another example, the input specifies partial breakthrough in which the target region of the MR environment in which the electronic device 101 presents a representation of the object 606 with portions of virtual content overlaid on the representation of the object 604, and does not break through portions of the real object 606 occluded by the virtual object 608 anchored to the real object 606. For example, the electronic device 101 displays portions of the representation of the real object 606 not occluded by virtual object 608 and/or the virtual content other than virtual object 608 with less than full opacity such that virtual content and real content are both visible at respective locations within the target region of the MR environment 600.

In some embodiments, the input provided to the API 401 by the client application 403a and/or client application 403b indicates particular presentation effects to apply when presenting the breakthrough effect. For example, the input specifies a breakthrough effect including presenting portions of the representation of the real object 606 not occluded by virtual object 608 with increased opacity and portions of the virtual content (other than object 608) in the target environment with decreased opacity when presenting the breakthrough effect in the second view in Fig. 6C compared to not presenting the breakthrough effect in the first view of Fig. 6C.

Additionally or alternatively, the input provided by the client application 403a and/or client application 403b to the API 401 specifies a size and/or shape of the target region to which the electronic device 101 should apply the breakthrough. As shown in the second view of Fig. 6C, the target region is optionally shaped like the real object 606, optionally with a minimum distance of space around the boundary of the object 606, excluding portions of the MR environment 600 of the virtual object 608 anchored to the real object 505. Alternatively, in some embodiments, the target region is oval-shaped, cube-shape, and/or prism-shaped.

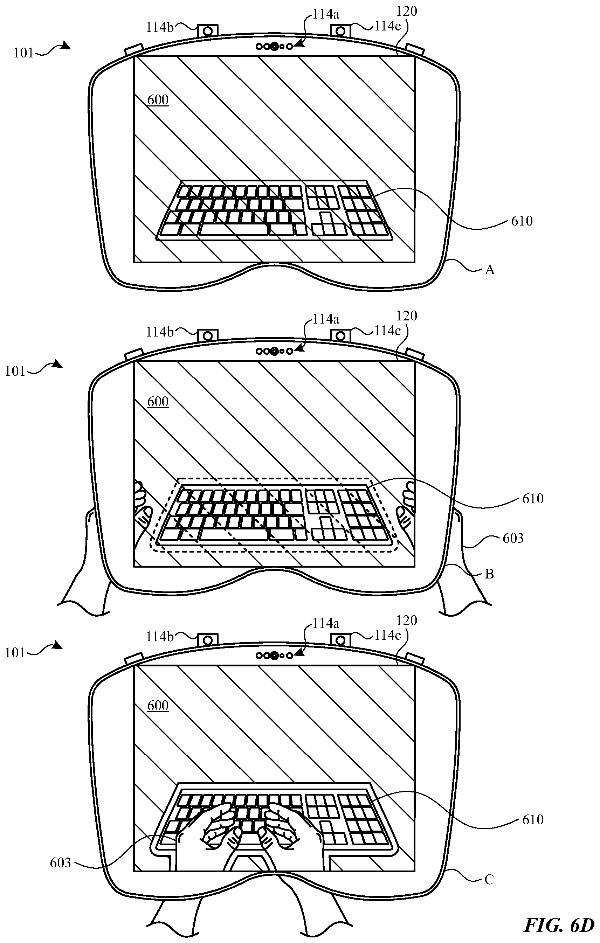

Fig. 6D illustrates an example of breakthrough for an input device 610 in the real environment of the electronic device 101 that is in communication with the electronic device 101. For example, the target region includes input device 610 (e.g., a keyboard) included a first view (view "A"), a second view (view "B"), and a third view (view "C") of the environment 600 in Fig. 6D. As shown in the first view of Fig. 6C without breakthrough, the input device 610 is occluded by the virtual content (represented by solid line shading over the input device 610) in MR environment 600. However, as shown in the second view of Fig. 6D, when a partial breakthrough effect is applied, the electronic device 101 reduces the occlusion of the object 604 by the virtual content (represented by the dotted line shading over the input device 610) in the MR environment 600. As shown in the third view of Fig. 6D, when a full breakthrough effect is applied, the electronic device reduces the occlusion of the object 604 by the virtual content (represented by the absence of shading over the input device 610), such that the input device 610 is more visible in the third view (e.g., full breakthrough) than in the second view (e.g., partial breakthrough). This type of breakthrough can be applied to input devices in response to detecting that the input device is in communication with the electronic device 101 and the user intends to interact with the input device 610, as evidenced by the location of the user's hands 603, for example. This type of breakthrough can enable the user to interact with the input device 610 while using electronic device 101.

A client application (e.g., client application 403a and/or client application 403b in Fig. 4) can implement breakthrough according to the example in Fig. 6D by providing the API 401 with an input including an indication of a target region including the object, an indication of one or more criteria for presenting the target region with a respective breakthrough effect, and an indication of the respective breakthrough effect to be applied.

In some embodiments, the client application 403a and/or client application 403b includes an indication of a target region in the input to the API 401. For example, the target region is a region of the MR environment including an input device 610 that is in communication with the electronic device 101. Although the input device 610 in Fig. 6D is a keyboard, other input devices are possible. In some embodiments, the electronic device 101 identifies the target region based on identifying that the input device 610, for example, using pre-processing module 404 described above with reference to Fig. 4 and/or based on communication of the electronic device 101 with the input device 610.

In some embodiments, the input to the API 401 from client application 403a and/or client application 403b includes an indication of one or more criteria that, when satisfied, cause the electronic device 101 to present the target region with the breakthrough effect. In some embodiments, the one or more criteria include criteria based on the distance between the user's hands 603 and the input device 610 and/or virtual content presented by the electronic device 101, such as presentation of a user interface element to which inputs using the input device 610 are directed. For example, the one or more criteria include a criterion that is satisfied when the electronic device 101 presents and/or directs the input focus to a text entry field, because text entry fields receive text inputs provided by input device 610 (e.g., a keyboard). In some embodiments, the one or more criteria include a first set of criteria associated with partial breakthrough shown in the second view of Fig. 6D and a second set of criteria associated with full breakthrough shown in the third view of Fig. 6D.

In some embodiments, the first set of criteria associated with partial breakthrough shown in the second view of Fig. 6D are associated with detecting the user intends to interact with the input device 610 but is not presently using the input device. For example, the first set of criteria include a criterion that is satisfied when the hands 603 of the user are within a threshold distance of the input device 610 without touching the input device 610. As another example the first set of one or more criteria include a criterion that is satisfied when the user's attention (e.g., including gaze or a gaze proxy) is directed to input device 610. In some embodiments, the first set of criteria include criteria related to the content displayed by the electronic device 101 described above.

In some embodiments, the second set of criteria associated with full breakthrough shown in the third view of Fig. 6D are associated with detecting the user using the input device 610. For example, the second set of criteria include a criterion that is satisfied when the hands 603 of the user are touching the input device 610. As another example, the first set of one or more criteria include a criterion that is satisfied when the user's attention (e.g., including gaze or a gaze proxy) is directed to input device 610 or to a user interface element the electronic device 101 displays that receives an input using the input device 610. In some embodiments, the second set of criteria include criteria related to the content displayed by the electronic device 101 described above.

In some embodiments, the input to the API 401 from the client application 403a and/or client application 403b includes an indication of the breakthrough effect(s) to be applied in accordance with the one or more criteria being satisfied. As described in more detail above, in some embodiments, the indication of the breakthrough in the input is a level of breakthrough with particular effects managed by the operating system 400 (e.g., using breakthrough module 410). For example, the input specifies full breakthrough in which the electronic device 101 presents a representation of the input device 610 that is not occluded by virtual content in the MR environment, as shown in the third view of Fig. 6D. Optionally, full breakthrough includes forgoing rendering virtual content in the volume at which the input device 610 is located. As another example, the input specifies partial breakthrough in which the electronic device 101 presents the representation of the input device 610 with partial transparency, as an outline, or with another effect such that portions of virtual content in the MR environment 600 are visible at locations of the target region. For example, the electronic device 101 displays portions of the representation of the input device 610 and portions of virtual content in the target region with less than full opacity such that virtual content and real content are both visible at respective locations within the target region of the MR environment 600.

In some embodiments, the input provided to the API 401 by the client application 403a and/or client application 403b indicates particular presentation effects to apply when presenting the breakthrough effects. For example, the input specifies a breakthrough effect including presenting portions of the representation of the input device 610 not occluded by virtual object 608 with increased opacity and portions of the virtual content in the target region with decreased opacity when presenting the breakthrough effect in the second view and third view in Fig. 6D compared to not presenting the breakthrough effect in the first view of Fig. 6D. In some embodiments, the opacity of the input device 610 is greater during full breakthrough, corresponding to the third view of Fig. 6D than it is during partial breakthrough, corresponding to the second view of Fig. 6D and the opacity of portions of virtual content in the target region are greater during partial breakthrough, corresponding to the second view of Fig. 6D, than they are during full breakthrough, corresponding to the third view of Fig. 6D.

Additionally or alternatively, the input provided by the client application 403a and/or client application 403b to the API 401 specifies a size and/or shape of the target region to which the electronic device 101 should apply the breakthrough. As shown in the second view of Fig. 6C, the target region is optionally shaped like the real object 606, optionally with a minimum distance of space around the boundary of the object 606, excluding portions of the MR environment 600 of the virtual object 608 anchored to the real object 505. Alternatively, in some embodiments, the target region is oval-shaped, cube-shape, and/or prism-shaped.

Although Fig. 6D illustrates an example using a keyboard, in some embodiments, other input devices are possible. In some embodiments, the electronic device 101 customizes breakthrough effects for input devices associated with particular hands of the user (e.g., the right hand or the left hand) and the one or more criteria are specific to the hands of the user. For example, the input specifying breakthrough effects for an input device associated with the right hand of the user include criteria that are satisfied based on the proximity of the user's right hand to the input device, but not satisfied based on the proximity of the user's left hand to the input device.

As described herein, in some embodiments, the presentation effect includes forgoing rendering virtual content and/or virtual objects in the target region of the environment. Forgoing rendering virtual content at these locations increases the visual prominence of the real environment in the target region, optionally including one or more real objects, relative to the visual prominence of the virtual content in the target region. Forgoing rendering a portion of virtual content, such as the portion of virtual content in the target region, reduces computing resources needed to render the virtual content. Optionally, in response to receiving an input that includes forgoing rendering virtual content in the target region as the presentation effect to be applied to the target region, the API outputs instructions to the application calling the API to instruct the application not to render virtual content in the volume of the target region and/or at the location of the target region. As another example, the breakthrough module 410 defines full breakthrough as forgoing rendering virtual content at the target region. In these examples, in response to receiving an input that includes full breakthrough in the target region as the presentation effect to be applied to the target region, the API outputs instructions to the application calling the API to instruct the application not to render virtual content in the volume of the target region and/or at the location of the target region.

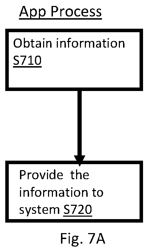

Figs. 7A-7D illustrate example application and/or API processes according to some embodiments of the disclosure. Implementations within the scope of the present disclosure can be partially or entirely realized using a tangible computer-readable storage medium (or multiple tangible computer-readable storage media of one or more types) encoding one or more computer-readable instructions. It should be recognized that computer-executable instructions can be organized in any format, including applications, widgets, processes, software, software modules and/or components.

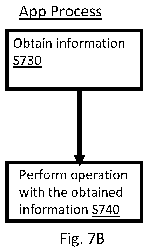

Implementations within the scope of the present disclosure include a computer-readable storage medium that encodes instructions organized as an application (e.g., application 760) that, when executed by one or more processing units, control an electronic device (e.g., device 750) to perform the method of Fig. 7A, the method of Fig. 7B, and/or one or more other processes and/or methods described herein.

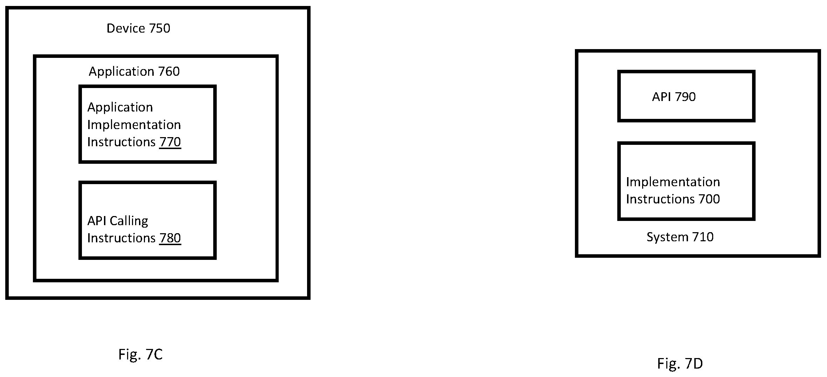

It should be recognized that application 760 (shown in Fig. 7C) can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application. In some embodiments, application 760 is an application that is pre-installed on device 750 at purchase (e.g., a first party application). In other embodiments, application 760 is an application that is provided to device 750 via an operating system update file (e.g., a first party application or a second party application). In other embodiments, application 760 is an application that is provided via an application store. In some embodiments, the application store can be an application store that is pre-installed on device 750 at purchase (e.g., a first party application store). In other embodiments, the application store is a third-party application store (e.g., an application store that is provided by another application store, downloaded via a network, and/or read from a storage device).

Referring to Fig. 7A, application 760 obtains information (e.g., S710). In some embodiments, at S710, information is obtained from at least one hardware component of the device 750. In some embodiments, at S710, information is obtained from at least one software module (e.g., set of instructions) of the device 750. In some embodiments, at S710, information is obtained from at least one hardware component external to the device 750 (e.g., a peripheral device, an accessory device, a server, etc.). In some embodiments, the information obtained at S710 includes positional information, time information, notification information, user information, environment information, electronic device state information, weather information, media information, historical information, event information, hardware information, and/or motion information. In some embodiments, in response to and/or after obtaining the information at S710, application 760 provides the information to a system (e.g., S720).

In some embodiments, the system (e.g., 710 shown in Fig. 7E) is an operating system hosted on the device 750. In some embodiments, the system (e.g., 710 shown in Fig. 7E) is an external device (e.g., a server, a peripheral device, an accessory, a personal computing device, etc.) that includes an operating system.

Referring to Fig. 7B, application 760 obtains information (e.g., S730). In some embodiments, the information obtained at S730 includes positional information, time information, notification information, user information, environment information electronic device state information, weather information, media information, historical information, event information, hardware information and/or motion information. In response to and/or after obtaining the information at S730, application 760 performs an operation with the information (e.g., S740). In some embodiments, the operation performed at S740 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 710 based on the information.

In some embodiments, one or more steps of the method of Fig. 7A and/or the method of Fig. 7B are performed in response to a trigger. In some embodiments, the trigger includes detection of an event, a notification received from system 710, a user input, and/or a response to a call to an API provided by system 710.

In some embodiments, the instructions of application 760, when executed, control device 750 to perform the method of Fig. 7A and/or the method of Fig. 7B by calling an application programming interface (API) (e.g., API 790) provided by system 710. In some embodiments, application 760 performs at least a portion of the method of Fig. 7A and/or the method of Fig. 7B without calling API 790.

In some embodiments, one or more steps of the method of Fig. 7A and/or the method of Fig. 7B includes calling an API (e.g., API 790) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to Fig. 7C, device 750 is illustrated. In some embodiments, device 750 is a personal computing device, a smart phone, a smart watch, a fitness tracker, a head mounted display (HMD) device, a media device, a communal device, a speaker, a television, and/or a tablet. Device 750 includes application 760 and an operating system (not shown) (e.g., system 710 shown in Fig. 7D). Application 760 includes application implementation instructions 770 and API calling instructions 780. System 710 includes API 790 and implementation instructions 700. It should be recognized that device 750, application 760, and/or system 710 can include more, fewer, and/or different components than illustrated in Fig. 7C and 7D.

In some embodiments, application implementation instructions 770 is a software module that includes a set of one or more computer-executable instructions. In some embodiments, the set of one or more instructions of instructions 770 correspond to one or more operations performed by application 760. For example, when application 760 is a messaging application, application implementation instructions 770 can include operations to receive and send messages. In some embodiments, application implementation instructions 770 communicates with API calling instructions to communicate with system 710 via API 790 (shown in Fig. 7E).

In some embodiments, API-calling instructions 780 is a software module that includes a set of one or more computer-executable instructions.

In some embodiments, implementation instructions 700 is a software module that includes a set of one or more computer-executable instructions.

In some embodiments, API 790 is a software module that includes a set of one or more computer-executable instructions. In some embodiments, API 790 provides an interface that allows a different set of instructions (e.g., API calling instructions 780) to access and/or use one or more functions, methods, procedures, data structures, classes, and/or other services provided by implementation instructions 700 of system 710. For example, API-calling instructions 780 can access a feature of implementation instructions 700 through one or more API calls or invocations (e.g., embodied by a function or a method call) exposed by API 790 and can pass data and/or control information using one or more parameters via the API calls or invocations. In some embodiments, API 790 allows application 760 to use a service provided by a Software Development Kit (SDK) library. In other embodiments, application 760 incorporates a call to a function or method provided by the SDK library and provided by API 790 or uses data types or objects defined in the SDK library and provided by API 790. In some embodiments, API-calling instructions 780 makes an API call via API 790 to access and use a feature of implementation instructions 700 that is specified by API 790. In such embodiments, implementation instructions 700 can return a value via API 790 to API-calling instructions 780 in response to the API call. The value can report to application 760 the capabilities or state of a hardware component of device 750, including those related to aspects such as input capabilities and state, output capabilities and state, processing capability, power state, storage capacity and state, and/or communications capability. In some embodiments, API 790 is implemented in part by firmware, microcode, or other low level logic that executes in part on the hardware component.

In some embodiments, API 790 allows a developer of API-calling instructions 780 (which can be a third-party developer) to leverage a feature provided by implementation instructions 700. In such embodiments, there can be one or more set of API-calling instructions (e.g., including API-calling instructions 780) that communicate with implementation instructions 700. In some embodiments, API 790 allows multiple sets of API-calling instructions written in different programming languages to communicate with implementation instructions 700 (e.g., API 790 can include features for translating calls and returns between implementation instructions 700 and API-calling instructions 780) while API 790 is implemented in terms of a specific programming language. In some embodiments, API-calling instructions 780 calls APIs from different providers such as a set of APIs from an OS provider, another set of APIs from a plug-in provider, and/or another set of APIs from another provider (e.g., the provider of a software library) or creator of the another set of APIs.

Examples of API 790 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a bluetooth API, an NFC API, a UWB API, a fitness API, a smart home API, contact transfer API, photos API, camera API, and/or image processing API. In some embodiments the sensor API is an API for accessing data associated with a sensor of device 750. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor and/or biometric sensor.

In some embodiments, implementation instructions 700 is a system (e.g., operating system, server system) software module (e.g., a collection of computer-readable instructions) that is constructed to perform an operation in response to receiving an API call via API 790. In some embodiments, implementation instructions 700 is constructed to provide an API response (via API 790) as a result of processing an API call. By way of example, implementation instructions 700 and API-calling instructions 780 can each be any one of an operating system, a library, a device driver, an API, an application program, or other module. It should be understood that implementation instructions 700 and API-calling instructions 780 can be the same or different type of software module from each other. In some embodiments, implementation instructions 700 is embodied at least in part in firmware, microcode, or other hardware logic.

In some embodiments, implementation instructions 700 returns a value through API 790 in response to an API call from API-calling instructions 780. While API 790 defines the syntax and result of an API call (e.g., how to invoke the API call and what the API call does), API 790 might not reveal how implementation instructions 700 accomplishes the function specified by the API call. Various API calls are transferred via the one or more application programming interfaces between API-calling instructions 780 and implementation instructions 700. Transferring the API calls can include issuing, initiating, invoking, calling, receiving, returning, and/or responding to the function calls or messages. In other words, transferring can describe actions by either of API-calling instructions 780 or implementation instructions 700. In some embodiments, a function call or other invocation of API 790 sends and/or receives one or more parameters through a parameter list or other structure.

In some embodiments, implementation instructions 700 provides more than one API, each providing a different view of or with different aspects of functionality implemented by implementation instructions 700. For example, one API of implementation instructions 700 can provide a first set of functions and can be exposed to third party developers, and another API of implementation instructions 700 can be hidden (e.g., not exposed) and provide a subset of the first set of functions and also provide another set of functions, such as testing or debugging functions which are not in the first set of functions. In some embodiments, implementation instructions 700 calls one or more other components via an underlying API and thus be both an set of API calling instructions and a set of implementation instructions. It should be recognized that implementation instructions 700 can include additional functions, methods, classes, data structures, and/or other features that are not specified through API 790 and are not available to API calling instructions 780. It should also be recognized that API calling instructions 780 can be on the same system as implementation instructions 700 or can be located remotely and access implementation instructions 700 using API 790 over a network. In some embodiments, implementation instructions 700, API 790, and/or API-calling instructions 780 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

Therefore, according to the above, some embodiments of the disclosure are directed to a method comprising presenting, via one or more displays, a mixed reality environment including virtual content and real content; receiving, from a first client application, an indication of a first target region in the mixed reality environment, one or more first criteria, and a first presentation effect; and in response to determining that the one or more first criteria are satisfied, adjusting presentation of the first target region in the mixed reality environment according to the first presentation effect. Additionally or alternatively, in some embodiments, determining that the one or more first criteria are satisfied includes: identifying at least a portion of a first real object in the first target region based on sensor data collected with one or more sensors using a pre-processing module that includes circuitry and/or software. Additionally or alternatively, in some embodiments, determining that the one or more first criteria are satisfied includes tracking at least a portion of a first real object in the first target region based on sensor data collected with one or more sensors using an object tracking module that includes circuitry and/or software. Additionally or alternatively, in some embodiments, the method includes receiving, from the first client application, one or more respective criteria including a criterion that is satisfied when a virtual object is displayed anchored to at least a portion of a respective real object in a respective target region in the mixed reality environment and a respective presentation effect, wherein presenting the mixed reality environment includes: in accordance with a determination that the one or more respective criteria are not satisfied, presenting the respective target region without the respective presentation effect; and in accordance with a determination that the one or more respective criteria are satisfied, presenting, via the one or more displays, the respective target region in the mixed reality environment with the respective presentation effect, including increasing the visual emphasis of at least a portion of the respective real object compared to the visual emphasis of at least the portion of the respective real object while presenting the respective target region without the respective presentation effect. Additionally or alternatively, in some embodiments, presenting the first target region according to the first presentation effect includes blending a representation of a real object in the first target region with one or more portions of the virtual content in the first target region using image blending circuitry. Additionally or alternatively, in some embodiments, the method includes receiving, from a second client application, an indication of a second target region in the mixed reality environment, one or more second criteria different from the one or more first criteria, and a second presentation effect different from the first presentation effect; and in accordance with a determination that the second client application is running, and in response to determining that the one or more second criteria are satisfied, adjusting the presentation of the second target region in the mixed reality environment according to the second presentation effect. Additionally or alternatively, in some embodiments, the one or more first criteria include one or more of the following: a criterion that is satisfied based on identifying a real object in the first target region having a predetermined type, a criterion that is satisfied when the first target region is within a threshold distance of a predefined portion of a user of the electronic device, a criterion that is satisfied when attention of the user of the electronic device is directed to the first target region, a criterion that is satisfied when the user of the electronic device interacts with a real object in the first target region, a criterion that is satisfied when the first target region includes a real object that is communicatively coupled to the electronic device, a criterion that is satisfied when motion of a real object in the first target region relative to the electronic device satisfies one or more motion criteria, a criterion that satisfied when a respective application is running on the electronic device, a criterion that is satisfied based on a type of user interface element to which input focus of the electronic device is directed, and a criterion that is satisfied based on a system state of the electronic device. Additionally or alternatively, in some embodiments, the first presentation effect includes one or more of the following: presenting a representation of a first real object in the first target region with a first amount of visual emphasis and displaying portions of the virtual content in the first target region with a second amount of visual emphasis; presenting the representation of the first real object in the first target region with a third amount of visual emphasis that is less than the first amount of visual emphasis and displaying the portions of the virtual content in the first target region with a fourth amount of visual emphasis that is greater than second amount of visual emphasis; and forgoing presenting the representation of the first real object in the first target region and presenting the portions of the virtual content in the first target region with a fifth amount of visual emphasis that is greater than the fourth amount of visual emphasis, wherein the first, second, third, fourth, and fifth amounts of visual emphasis include respective sets of visual characteristics defined by system software of the electronic device. Additionally or alternatively, in some embodiments, the first presentation effect includes one or more of the following: a respective amount of translucency; a respective color characteristic; a respective shape and/or size of the first target region to which the first presentation effect is applied; and an audio characteristic. Additionally or alternatively, in some embodiments, the method includes receiving, from the first client application, an indication of a second target region in the mixed reality environment, one or more second criteria different from the one or more first criteria, and a second presentation effect different from the first presentation effect; and in response to determining that the one or more second criteria are satisfied, adjusting the presentation of the second target region in the mixed reality environment according to the second presentation effect.

Some embodiments are directed to an electronic device, comprising memory in communication with one or more processors configured to perform the one or more methods described herein. Some embodiments are directed to a non-transitory computer readable storage medium storing instructions that, when executed by an electronic device causes the electronic device to perform the one or more of the method described herein.

Some embodiments are directed to a method comprising presenting, via one or more displays, a mixed reality environment including virtual content and real content; providing, to an application programming interface, an indication of a first target region in the mixed reality environment, one or more first criteria, and a first presentation effect; and in response to receiving an indication from the application programming interface that the one or more first criteria are satisfied, adjusting presentation of the first target region in the mixed reality environment according to the first presentation effect.

Exemplary methods, electronic devices, and non-transitory computer-readable storage media are set out in the following items.

### Item list 1:

1. A non-transitory computer readable storage medium storing instructions that, when executed by an electronic device with memory and one or more processors coupled to the memory, cause the electronic device to perform a method comprising:
   presenting, via one or more displays, a mixed reality environment including virtual content and real content;
   receiving, from a first client application, an indication of a first target region in the mixed reality environment, one or more first criteria, and a first presentation effect; and
   in response to determining that the one or more first criteria are satisfied, adjusting presentation of the first target region in the mixed reality environment according to the first presentation effect.
2. The non-transitory computer readable storage medium of item 1, wherein determining that the one or more first criteria are satisfied includes:
   identifying at least a portion of a first real object in the first target region based on sensor data collected with one or more sensors using a pre-processing module that includes circuitry and/or software.
3. The non-transitory computer readable storage medium of item 1, wherein determining that the one or more first criteria are satisfied includes:
   tracking at least a portion of a first real object in the first target region based on sensor data collected with one or more sensors using an object tracking module that includes circuitry and/or software.
4. The non-transitory computer readable storage medium of item 1, wherein the method further comprises:
   receiving, from the first client application, one or more respective criteria including a criterion that is satisfied when a virtual object is displayed anchored to at least a portion of a respective real object in a respective target region in the mixed reality environment and a respective presentation effect, wherein presenting the mixed reality environment includes:
   in accordance with a determination that the one or more respective criteria are not satisfied, presenting the respective target region without the respective presentation effect; and
   in accordance with a determination that the one or more respective criteria are satisfied, presenting, via the one or more displays, the respective target region in the mixed reality environment with the respective presentation effect, including increasing visual emphasis of at least a portion of the respective real object compared to the visual emphasis of at least the portion of the respective real object while presenting the respective target region without the respective presentation effect.
5. The non-transitory computer readable storage medium of item 1, wherein presenting the first target region according to the first presentation effect includes blending a representation of a real object in the first target region with one or more portions of the virtual content in the first target region using image blending circuitry.
6. The non-transitory computer readable storage medium of item 1, wherein the method further comprises:
   receiving, from a second client application, an indication of a second target region in the mixed reality environment, one or more second criteria different from the one or more first criteria, and a second presentation effect different from the first presentation effect; and
   in accordance with a determination that the second client application is running, and in response to determining that the one or more second criteria are satisfied, adjusting the presentation of the second target region in the mixed reality environment according to the second presentation effect.
7. The non-transitory computer readable storage medium of item 1, wherein the one or more first criteria include one or more of the following:
   a criterion that is satisfied based on identifying a real object in the first target region having a predetermined type,
   a criterion that is satisfied when the first target region is within a threshold distance of a predefined portion of a user of the electronic device,
   a criterion that is satisfied when attention of the user of the electronic device is directed to the first target region,
   a criterion that is satisfied when the user of the electronic device interacts with a real object in the first target region,
   a criterion that is satisfied when the first target region includes a real object that is communicatively coupled to the electronic device,
   a criterion that is satisfied when motion of a real object in the first target region relative to the electronic device satisfies one or more motion criteria,
   a criterion that satisfied when a respective application is running on the electronic device,
   a criterion that is satisfied based on a type of user interface element to which input focus of the electronic device is directed, and
   a criterion that is satisfied based on a system state of the electronic device.
8. The non-transitory computer readable storage medium of item 1, wherein the first presentation effect includes one or more of the following:
   presenting a representation of a first real object in the first target region with a first amount of visual emphasis and displaying portions of the virtual content in the first target region with a second amount of visual emphasis;
   presenting the representation of the first real object in the first target region with a third amount of visual emphasis that is less than the first amount of visual emphasis and displaying the portions of the virtual content in the first target region with a fourth amount of visual emphasis that is greater than second amount of visual emphasis; and
   forgoing presenting the representation of the first real object in the first target region and presenting the portions of the virtual content in the first target region with a fifth amount of visual emphasis that is greater than the fourth amount of visual emphasis, wherein the first, second, third, fourth, and fifth amounts of visual emphasis include respective sets of visual characteristics defined by system software of the electronic device.
9. The non-transitory computer readable storage medium of item 1, wherein the first presentation effect includes one or more of the following:
   a respective amount of translucency;
   a respective color characteristic;
   a respective shape and/or size of the first target region to which the first presentation effect is applied; and
   an audio characteristic.
10. The non-transitory computer readable storage medium of item 1, wherein the method further comprises:
   receiving, from the first client application, an indication of a second target region in the mixed reality environment, one or more second criteria different from the one or more first criteria, and a second presentation effect different from the first presentation effect; and
   in response to determining that the one or more second criteria are satisfied, adjusting the presentation of the second target region in the mixed reality environment according to the second presentation effect.
11. The non-transitory computer readable storage medium of item 1, wherein adjusting presentation of the first target region in the mixed reality environment according to the presentation effect includes forgoing rendering a portion of virtual content in the first target region.
12. An electronic device comprising:
   memory; and
   one or more processors coupled to the memory and configured to perform a method comprising:
      presenting, via one or more displays, a mixed reality environment including virtual content and real content;
      receiving, from a first client application, an indication of a first target region in the mixed reality environment, one or more first criteria, and a first presentation effect; and
      in response to determining that the one or more first criteria are satisfied, adjusting presentation of the first target region in the mixed reality environment according to the first presentation effect.
13. The electronic device of item 12, wherein determining that the one or more first criteria are satisfied includes:
   identifying at least a portion of a first real object in the first target region based on sensor data collected with one or more sensors using a pre-processing module that includes circuitry and/or software.
14. The electronic device of item 12, wherein determining that the one or more first criteria are satisfied includes:
   tracking at least a portion of a first real object in the first target region based on sensor data collected with one or more sensors using an object tracking module that includes circuitry and/or software.
15. The electronic device of item 12, wherein the method further comprises:
   receiving, from the first client application, one or more respective criteria including a criterion that is satisfied when a virtual object is displayed anchored to at least a portion of a respective real object in a respective target region in the mixed reality environment and a respective presentation effect, wherein presenting the mixed reality environment includes:
   in accordance with a determination that the one or more respective criteria are not satisfied, presenting the respective target region without the respective presentation effect; and
   in accordance with a determination that the one or more respective criteria are satisfied, presenting, via the one or more displays, the respective target region in the mixed reality environment with the respective presentation effect, including increasing the visual emphasis of at least a portion of the respective real object compared to the visual emphasis of at least the portion of the respective real object while presenting the respective target region without the respective presentation effect.
16. The electronic device of item 12, wherein the method further comprises:
   receiving, from a second client application, an indication of a second target region in the mixed reality environment, one or more second criteria different from the one or more first criteria, and a second presentation effect different from the first presentation effect; and
   in accordance with a determination that the second client application is running, and in response to determining that the one or more second criteria are satisfied, adjusting the presentation of the second target region in the mixed reality environment according to the second presentation effect.
17. The electronic device of item 12, wherein the one or more first criteria include one or more of the following:
   a criterion that is satisfied based on identifying a real object in the first target region having a predetermined type,
   a criterion that is satisfied when the first target region is within a threshold distance of a predefined portion of a user of the electronic device,
   a criterion that is satisfied when attention of the user of the electronic device is directed to the first target region,
   a criterion that is satisfied when the user of the electronic device interacts with a real object in the first target region,
   a criterion that is satisfied when the first target region includes a real object that is communicatively coupled to the electronic device,
   a criterion that is satisfied when motion of a real object in the first target region relative to the electronic device satisfies one or more motion criteria,
   a criterion that satisfied when a respective application is running on the electronic device,
   a criterion that is satisfied based on a type of user interface element to which input focus of the electronic device is directed, and
   a criterion that is satisfied based on a system state of the electronic device.
18. The electronic device of item 12, wherein the first presentation effect includes one or more of the following:
   presenting a representation of a first real object in the first target region with a first amount of visual emphasis and displaying portions of the virtual content in the first target region with a second amount of visual emphasis;
   presenting the representation of the first real object in the first target region with a third amount of visual emphasis that is less than the first amount of visual emphasis and displaying the portions of the virtual content in the first target region with a fourth amount of visual emphasis that is greater than second amount of visual emphasis; and
   forgoing presenting the representation of the first real object in the first target region and presenting the portions of the virtual content in the first target region with a fifth amount of visual emphasis that is greater than the fourth amount of visual emphasis, wherein the first, second, third, fourth, and fifth amounts of visual emphasis include respective sets of visual characteristics defined by system software of the electronic device.
19. The electronic device of item 12, wherein adjusting presentation of the first target region in the mixed reality environment according to the presentation effect includes forgoing rendering a portion of virtual content in the first target region.
20. A method comprising:
   presenting, via one or more displays, a mixed reality environment including virtual content and real content;
   receiving, from a first client application, an indication of a first target region in the mixed reality environment, one or more first criteria, and a first presentation effect; and
   in response to determining that the one or more first criteria are satisfied, adjusting presentation of the first target region in the mixed reality environment according to the first presentation effect.

### Item list 2:

1. A method comprising:
   presenting, via one or more displays, a mixed reality environment including virtual content and real content;
   receiving, from a first client application, an indication of a first target region in the mixed reality environment, one or more first criteria, and a first presentation effect; and
   in response to determining that the one or more first criteria are satisfied, adjusting presentation of the first target region in the mixed reality environment according to the first presentation effect.
2. The method of item 1, wherein determining that the one or more first criteria are satisfied includes:
   identifying at least a portion of a first real object in the first target region based on sensor data collected with one or more sensors using a pre-processing module that includes circuitry and/or software.
3. The method of any of items 1-2, wherein determining that the one or more first criteria are satisfied includes:
   tracking at least a portion of a first real object in the first target region based on sensor data collected with one or more sensors using an object tracking module that includes circuitry and/or software.
4. The method of any of items 1-3, further comprising:
   receiving, from the first client application, one or more respective criteria including a criterion that is satisfied when a virtual object is displayed anchored to at least a portion of a respective real object in a respective target region in the mixed reality environment and a respective presentation effect, wherein presenting the mixed reality environment includes:
   in accordance with a determination that the one or more respective criteria are not satisfied, presenting the respective target region without the respective presentation effect; and
   in accordance with a determination that the one or more respective criteria are satisfied, presenting, via the one or more displays, the respective target region in the mixed reality environment with the respective presentation effect, including increasing the visual emphasis of at least a portion of the respective real object compared to the visual emphasis of at least the portion of the respective real object while presenting the respective target region without the respective presentation effect.
5. The method of any of items 1-4, wherein presenting the first target region according to the first presentation effect includes blending a representation of a real object in the first target region with one or more portions of the virtual content in the first target region using image blending circuitry.
6. The method of any of items 1-5, further comprising:
   receiving, from a second client application, an indication of a second target region in the mixed reality environment, one or more second criteria different from the one or more first criteria, and a second presentation effect different from the first presentation effect; and
   in accordance with a determination that the second client application is running, and in response to determining that the one or more second criteria are satisfied, adjusting the presentation of the second target region in the mixed reality environment according to the second presentation effect.
7. The method of any of items 1-6, wherein the one or more first criteria include one or more of the following:
   a criterion that is satisfied based on identifying a real object in the first target region having a predetermined type,
   a criterion that is satisfied when the first target region is within a threshold distance of a predefined portion of a user of the electronic device,
   a criterion that is satisfied when attention of the user of the electronic device is directed to the first target region,
   a criterion that is satisfied when the user of the electronic device interacts with a real object in the first target region,
   a criterion that is satisfied when the first target region includes a real object that is communicatively coupled to the electronic device,
   a criterion that is satisfied when motion of a real object in the first target region relative to the electronic device satisfies one or more motion criteria,
   a criterion that satisfied when a respective application is running on the electronic device,
   a criterion that is satisfied based on a type of user interface element to which input focus of the electronic device is directed, and
   a criterion that is satisfied based on a system state of the electronic device.
8. The method of any of items 1-7, wherein the first presentation effect includes one or more of the following:
   presenting a representation of a first real object in the first target region with a first amount of visual emphasis and displaying portions of the virtual content in the first target region with a second amount of visual emphasis;
   presenting the representation of the first real object in the first target region with a third amount of visual emphasis that is less than the first amount of visual emphasis and displaying the portions of the virtual content in the first target region with a fourth amount of visual emphasis that is greater than second amount of visual emphasis; and
   forgoing presenting the representation of the first real object in the first target region and presenting the portions of the virtual content in the first target region with a fifth amount of visual emphasis that is greater than the fourth amount of visual emphasis, wherein the first, second, third, fourth, and fifth amounts of visual emphasis include respective sets of visual characteristics defined by system software of the electronic device.
9. The method of any of items 1-7, wherein the first presentation effect includes one or more of the following:
   a respective amount of translucency;
   a respective color characteristic;
   a respective shape and/or size of the first target region to which the first presentation effect is applied; and
   an audio characteristic.
10. The method of any of items 1-9, further comprising:
   receiving, from the first client application, an indication of a second target region in the mixed reality environment, one or more second criteria different from the one or more first criteria, and a second presentation effect different from the first presentation effect; and
   in response to determining that the one or more second criteria are satisfied, adjusting the presentation of the second target region in the mixed reality environment according to the second presentation effect.
11. An electronic device, comprising:
   memory in communication with one or more processors configured to perform the method of any of items 1-10.
12. A non-transitory computer readable storage medium storing instructions that, when executed by an electronic device causes the electronic device to perform the method of any of items 1-10.
13. A method comprising:
   presenting, via one or more displays, a mixed reality environment including virtual content and real content;
   providing, to an application programming interface, an indication of a first target region in the mixed reality environment, one or more first criteria, and a first presentation effect; and
   in response to receiving an indication from the application programming interface that the one or more first criteria are satisfied, adjusting presentation of the first target region in the mixed reality environment according to the first presentation effect.

### Item list 3:

1. A method comprising:
   presenting, via one or more displays, a mixed reality environment including virtual content and real content;
   receiving, from a first client application, an indication of a first target region in the mixed reality environment, one or more first criteria, and a first presentation effect; and
   in response to determining that the one or more first criteria are satisfied, adjusting presentation of the first target region in the mixed reality environment according to the first presentation effect.
2. The method of item 1, wherein determining that the one or more first criteria are satisfied includes:
   identifying at least a portion of a first real object in the first target region based on sensor data collected with one or more sensors using a pre-processing module that includes circuitry and/or software.
3. The method of any of items 1-2, wherein determining that the one or more first criteria are satisfied includes:
   tracking at least a portion of a first real object in the first target region based on sensor data collected with one or more sensors using an object tracking module that includes circuitry and/or software.
4. The method of any of items 1-3, further comprising:
   receiving, from the first client application, one or more respective criteria including a criterion that is satisfied when a virtual object is displayed anchored to at least a portion of a respective real object in a respective target region in the mixed reality environment and a respective presentation effect, wherein presenting the mixed reality environment includes:
   in accordance with a determination that the one or more respective criteria are not satisfied, presenting the respective target region without the respective presentation effect; and
   in accordance with a determination that the one or more respective criteria are satisfied, presenting, via the one or more displays, the respective target region in the mixed reality environment with the respective presentation effect, including increasing the visual emphasis of at least a portion of the respective real object compared to the visual emphasis of at least the portion of the respective real object while presenting the respective target region without the respective presentation effect.
5. The method of any of items 1-4, wherein presenting the first target region according to the first presentation effect includes blending a representation of a real object in the first target region with one or more portions of the virtual content in the first target region using image blending circuitry.
6. The method of any of items 1-5, further comprising:
   receiving, from a second client application, an indication of a second target region in the mixed reality environment, one or more second criteria different from the one or more first criteria, and a second presentation effect different from the first presentation effect; and
   in accordance with a determination that the second client application is running, and in response to determining that the one or more second criteria are satisfied, adjusting the presentation of the second target region in the mixed reality environment according to the second presentation effect.
7. The method of any of items 1-6, wherein the one or more first criteria include one or more of the following:
   a criterion that is satisfied based on identifying a real object in the first target region having a predetermined type,
   a criterion that is satisfied when the first target region is within a threshold distance of a predefined portion of a user of the electronic device,
   a criterion that is satisfied when attention of the user of the electronic device is directed to the first target region,
   a criterion that is satisfied when the user of the electronic device interacts with a real object in the first target region,
   a criterion that is satisfied when the first target region includes a real object that is communicatively coupled to the electronic device,
   a criterion that is satisfied when motion of a real object in the first target region relative to the electronic device satisfies one or more motion criteria,
   a criterion that satisfied when a respective application is running on the electronic device,
   a criterion that is satisfied based on a type of user interface element to which input focus of the electronic device is directed, and
   a criterion that is satisfied based on a system state of the electronic device.
8. The method of any of items 1-7, wherein the first presentation effect includes one or more of the following:
   presenting a representation of a first real object in the first target region with a first amount of visual emphasis and displaying portions of the virtual content in the first target region with a second amount of visual emphasis;
   presenting the representation of the first real object in the first target region with a third amount of visual emphasis that is less than the first amount of visual emphasis and displaying the portions of the virtual content in the first target region with a fourth amount of visual emphasis that is greater than second amount of visual emphasis; and
   forgoing presenting the representation of the first real object in the first target region and presenting the portions of the virtual content in the first target region with a fifth amount of visual emphasis that is greater than the fourth amount of visual emphasis, wherein the first, second, third, fourth, and fifth amounts of visual emphasis include respective sets of visual characteristics defined by system software of the electronic device.
9. The method of any of items 1-7, wherein the first presentation effect includes one or more of the following:
   a respective amount of translucency;
   a respective color characteristic;
   a respective shape and/or size of the first target region to which the first presentation effect is applied; and
   an audio characteristic.
10. The method of any of items 1-9, further comprising:
   receiving, from the first client application, an indication of a second target region in the mixed reality environment, one or more second criteria different from the one or more first criteria, and a second presentation effect different from the first presentation effect; and
   in response to determining that the one or more second criteria are satisfied, adjusting the presentation of the second target region in the mixed reality environment according to the second presentation effect.
11. The method of any of items 1-10, wherein adjusting presentation of the first target region in the mixed reality environment according to the presentation effect includes forgoing rendering a portion of virtual content in the first target region.
12. An electronic device, comprising:
   memory in communication with one or more processors configured to perform the method of any of items 1-11.
13. A non-transitory computer readable storage medium storing instructions that, when executed by an electronic device causes the electronic device to perform the method of any of items 1-11.

The foregoing description, for purpose of explanation, has been described with reference to specific examples. However, the illustrative discussions above are not intended to be exhaustive or to limit the invention to the precise forms disclosed. Many modifications and variations are possible in view of the above teachings. The examples were chosen and described in order to best explain the principles of the invention and its practical applications, to thereby enable others skilled in the art to best use the invention and various described examples with various modifications as are suited to the particular use contemplated.

## Claims

1. A method comprising:
presenting, via one or more displays, a mixed reality environment including virtual content and real content;
receiving, from a first client application, an indication of a first target region in the mixed reality environment, one or more first criteria, and a first presentation effect; and
in response to determining that the one or more first criteria are satisfied, adjusting presentation of the first target region in the mixed reality environment according to the first presentation effect.

2. The method of claim 1, wherein determining that the one or more first criteria are satisfied includes:
identifying at least a portion of a first real object in the first target region based on sensor data collected with one or more sensors using a pre-processing module that includes circuitry and/or software.

3. The method of any of claims 1-2, wherein determining that the one or more first criteria are satisfied includes:
tracking at least a portion of a first real object in the first target region based on sensor data collected with one or more sensors using an object tracking module that includes circuitry and/or software.

4. The method of any of claims 1-3, further comprising:
receiving, from the first client application, one or more respective criteria including a criterion that is satisfied when a virtual object is displayed anchored to at least a portion of a respective real object in a respective target region in the mixed reality environment and a respective presentation effect, wherein presenting the mixed reality environment includes:
in accordance with a determination that the one or more respective criteria are not satisfied, presenting the respective target region without the respective presentation effect; and
in accordance with a determination that the one or more respective criteria are satisfied, presenting, via the one or more displays, the respective target region in the mixed reality environment with the respective presentation effect, including increasing the visual emphasis of at least a portion of the respective real object compared to the visual emphasis of at least the portion of the respective real object while presenting the respective target region without the respective presentation effect.

5. The method of any of claims 1-4, wherein presenting the first target region according to the first presentation effect includes blending a representation of a real object in the first target region with one or more portions of the virtual content in the first target region using image blending circuitry.

6. The method of any of claims 1-5, further comprising:
receiving, from a second client application, an indication of a second target region in the mixed reality environment, one or more second criteria different from the one or more first criteria, and a second presentation effect different from the first presentation effect; and
in accordance with a determination that the second client application is running, and in response to determining that the one or more second criteria are satisfied, adjusting the presentation of the second target region in the mixed reality environment according to the second presentation effect.

7. The method of any of claims 1-6, wherein the one or more first criteria include one or more of the following:
a criterion that is satisfied based on identifying a real object in the first target region having a predetermined type,
a criterion that is satisfied when the first target region is within a threshold distance of a predefined portion of a user of the electronic device,
a criterion that is satisfied when attention of the user of the electronic device is directed to the first target region,
a criterion that is satisfied when the user of the electronic device interacts with a real object in the first target region,
a criterion that is satisfied when the first target region includes a real object that is communicatively coupled to the electronic device,
a criterion that is satisfied when motion of a real object in the first target region relative to the electronic device satisfies one or more motion criteria,
a criterion that satisfied when a respective application is running on the electronic device,
a criterion that is satisfied based on a type of user interface element to which input focus of the electronic device is directed, and
a criterion that is satisfied based on a system state of the electronic device.

8. The method of any of claims 1-7, wherein the first presentation effect includes one or more of the following:
presenting a representation of a first real object in the first target region with a first amount of visual emphasis and displaying portions of the virtual content in the first target region with a second amount of visual emphasis;
presenting the representation of the first real object in the first target region with a third amount of visual emphasis that is less than the first amount of visual emphasis and displaying the portions of the virtual content in the first target region with a fourth amount of visual emphasis that is greater than second amount of visual emphasis; and
forgoing presenting the representation of the first real object in the first target region and presenting the portions of the virtual content in the first target region with a fifth amount of visual emphasis that is greater than the fourth amount of visual emphasis, wherein the first, second, third, fourth, and fifth amounts of visual emphasis include respective sets of visual characteristics defined by system software of the electronic device.

9. The method of any of claims 1-7, wherein the first presentation effect includes one or more of the following:
a respective amount of translucency;
a respective color characteristic;
a respective shape and/or size of the first target region to which the first presentation effect is applied; and
an audio characteristic.

10. The method of any of claims 1-9, further comprising:
receiving, from the first client application, an indication of a second target region in the mixed reality environment, one or more second criteria different from the one or more first criteria, and a second presentation effect different from the first presentation effect; and
in response to determining that the one or more second criteria are satisfied, adjusting the presentation of the second target region in the mixed reality environment according to the second presentation effect.

11. The method of any of claims 1-10, wherein adjusting presentation of the first target region in the mixed reality environment according to the presentation effect includes forgoing rendering a portion of virtual content in the first target region.

12. An electronic device, comprising:
memory in communication with one or more processors configured to perform the method of any of claims 1-11.

13. A non-transitory computer readable storage medium storing instructions that, when executed by an electronic device causes the electronic device to perform the method of any of claims 1-11.
